(19) Europäisches Patentamt
European Patent Office
Office européen des brevets

(11) EP 1 114 072 B1

(12) # EUROPEAN PATENT SPECIFICATION

(45) Date of publication and mention of the grant of the patent:
**15.12.2004 Bulletin 2004/51**

(21) Application number: **99940214.2**

(22) Date of filing: **09.08.1999**

(51) Int Cl.[7]: **C08F 110/06**, C08F 4/651, C08F 4/654

(86) International application number:
**PCT/FI1999/000658**

(87) International publication number:
**WO 2000/008074 (17.02.2000 Gazette 2000/07)**

(54) **CATALYST COMPONENT COMPRISING MAGNESIUM, TITANIUM, A HALOGEN AND AN ELECTRON DONOR, ITS PREPARATION AND USE**

MAGNESIUM, TITANIUM, HALOGEN UND ELEKTRONENDONOR-ENTHALTENDE KATALYSATORKOMPONENTE, IHRE HERSTELLUNG UND VERWENDUNG

COMPOSANT CATALYTIQUE COMPRENANT DU MAGNESIUM, DU TITANE, UN HALOGENE ET UN DONNEUR D'ELECTRONS, PREPARATION ET UTILISATION DE CE COMPOSANT

(84) Designated Contracting States:
**AT BE CH CY DE DK ES FI FR GB GR IE IT LI LU MC NL PT SE**

(30) Priority: **07.08.1998 FI 981718**

(43) Date of publication of application:
**11.07.2001 Bulletin 2001/28**

(73) Proprietor: **Borealis Technology Oy**
**06101 Porvoo (FI)**

(72) Inventors:
- **GAROFF, Thomas**
**FIN-00840 Helsinki (FI)**
- **LEINONEN, Timo**
**FIN-06750 Tolkkinen (FI)**
- **ALA-HUIKKU, Sirpa**
**FIN-00970 Helsinki (FI)**

(74) Representative: **Heikkinen, Esko Juhani**
**Berggren Oy Ab**
**P.O. Box 16**
**00101 Helsinki (FI)**

(56) References cited:

| | |
|---|---|
| **EP-A- 0 173 472** | **EP-A- 0 195 497** |
| **EP-A- 0 226 004** | **EP-A- 0 260 507** |
| **EP-A- 0 926 165** | **US-A- 4 804 648** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 114 072 B1

## Description

The invention relates to a process for the preparation of an olefin polymerization catalyst component comprising a magnesium dihalide, a titanium tetrahalide, and a dicarboxylic acid di-, oligo- or polyester as internal electron donor. The invention also relates to such a catalyst component and its use for the polymerization of α-olefins such as propene.

## Background of the invention

Generally, so called Ziegler-Natta catalyst components of the above.kind have been prepared by reacting a magnesium halide-alcohol -complex support with a titanium tetrahalide and an electron donor which usually is a phthalic acid di-, oligo- or polyester. The preparation involves the use of large amounts of reagents and washing liquids, which are difficult to handle. Additionally, byproducts are formed, which cannot easily be regenerated or destroyed, but form an environmental problem.

For example, the preparation of a conventional polypropene catalyst component involves the reaction of a magnesium dichloride-alcohol complex support with titanium tetrachloride to give a reactive β-magnesium dichloride surface as intermediate and hydrogen chloride and titanium alkoxy trichloride as byproducts. Then, the reactive β-magnesium dichloride surface is activated with further titanium tetrachloride to give said catalyst component (the treatment with a titanium halide such as titanium tetrachloride is henceforth called titanation): This gives an inert magnesium chloride-based support covered with active sites based on titanium, chlorine and, optionally, an internal electron donor.

The titanium alkoxy trichloride byproduct formed in said titanation is a catalyst poison and must be carefully removed by extensive washing using large amounts of titanium tetrachloride. Further, the titanium alkoxy trichloride must be carefully separated from the titanium tetrachloride washing liquid, if the latter is to be reused e.g. for activating the reactive β-magnesium dichloride. Finally, the titanium alkoxy trichloride is a hazardous waste material, which is difficult to dispose of.

Thus, in a typical propene polymerization catalyst component preparation involving two titanations and three heptane washes, one mol of produced catalyst component (mol Mg) requires about 40 mol of titanium tetrachloride e. g. as washing liquid to be circulated, and produces as waste material an amount of about three mol of titanium alkoxy trichloride as well as about three mol of hydrogen chloride.

Sumitomo, EP 0 748 820 A1 (hereinafter referred to as "Sumitomo"), has prepared dialkoxy magnesium, reacted it with titanium tetrachloride to form an intermediate and then' reacted the intermediate with phthalic acid dichloride to form a catalytically active propene polymerization catalyst component. The activity was raised by repeated titanations, as .well as repeated washes with toluene and hexane. See page 10, lines 14 to 37, of said publication.

Said process of Sumitomo has avoided the reaction between the solid magnesium dichloride-alcohol complex and liquid titanium tetrachloride, and thereby eliminated the formation of large quantities of catalytically poisonous titanium alkoxy trichloride byproduct. However, as much as four titanations and hydrocarbon treatments are still needed to give satisfactory catalytic activity.

Further, conventional processes based on titanium trichloride and on titanium tetrachloride covered magnesium dichloride give catalyst component particles of either the wrong size or too broad a particle size distribution. As the relative size and size distribution of the catalyst component particles are reproduced in the olefin polymer (the so called "replication"-phenomena), this is reflected as morphology problems in the polymer product. Such problems are, e.g., fouling of the polymerization reactor and clogging of its piping due to the presence of too much fines.

## Description of the invention

The purpose of the present invention is to provide a process which results in a catalyst component having satisfactory activity without producing harmful byproducts such as said titanium alkoxy trichloride or requiring the use of large amounts of titanation reagent and/or washing liquid. A further purpose of the invention is to obtain a catalyst component which has the right particle size and size distribution, so that a suitable polymer will be obtained without disturbances in the polymerization process.

The problem described above has now been solved with a novel process for the preparation of a catalyst component of the above type, which is mainly characterized by the steps of:

(i) reacting in solution at least one magnesium compound (a), selected from the group consisting of a dialkyl magnesium $R_2Mg$, an alkyl magnesium alkoxide RMgOR, wherein each R is a similar or different $C_1$-$C_{20}$ alkyl, and a magnesium dihalide $MgX_2$, wherein X is a halogen, with at least one alcohol (b), selected from the group consisting of a mixture of at least one monohydric alcohol R'OH and at least one polyhydric alcohol $R'(OH)_m$, and at least one polyhydric alcohol $R'(OH)_m$, wherein R' is an 1-valent or, respectively, an m-valent $C_1$-$C_{20}$ hydrocarbyl

group and m is an integer selected from 2, 3, 4, 5 and 6, to give a first intermediate (ab), and

(ii) reacting in solution said first intermediate (ab) writh at least one dicarboxylic acid dihalide (c) which forms essentially all of said carboxylic acid di-, oligo- or polyester and has the formula (1):

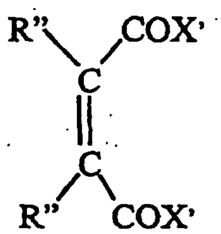

(1)

wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen, to give a second intermediate (abc), and

(iii) reacting said second intermediate (abc) with at least one titanium tetrahalide $TiX''_4$ (d) wherein X" is a halogen,

(iv) recovering by precipitation said catalyst component in crude form, or a precursor of said catalyst component, and

(v) optionally washing said crude catalyst component or said precursor, to give said catalyst component.

It has thus been found that a high activity olefin polymerization catalyst comprising a magnesium halide, a titanium tetrahalide and a dicarboxylic acid di-, oligo- or polyester as internal donor can be prepared without the above mentioned disadvantages by reacting the reaction product of a dialkyl magnesium or a magnesium halide and a polyhydric alcohol with a dicarboxylic acid dihalide and a titanium tetrahalide. Further, by means of the polyhydric alcohol, the morphology of the catalyst component and thus the morphology of the polymer can be controlled and improved.

Of the above mentioned steps (i) to (iii), preferably all are performed in solution. If necessary, one or several hydrocarbon solvents, optionally with the application of stirring and/or heating, can be used to dissolve the reactants. Performing the process in a solution means that all reagent molecules have access to, and can react with, each other, thus forming a homogenous reaction product. Earlier processes which have been performed by reacting a solid support with a titanium compound and an electron donor, do not form this kind of homogenous reaction products. See the above description of earlier technique.

The catalyst component is in step (iv) preferably recovered in solid form by precipitation. Precipitation in the present invention means that the reaction product formed in solution is recovered as a powder, the particles of which comprise similar individual molecules of that reaction product. It is thus distinguished from earlier processes which include first the precipitation of a support and then the reaction of the support surface with catalytically active component (s). The particles formed according to the present invention are thus homogenous, while the particles of earlier processes are more or less heterogenous (inert core + active surface).

It is preferable if said first and second intermediates as well as the final product of the claimed process are separate compounds with an essentially stoichiometric composition. Often, they are complexes. A complex is, according to Römpps Chemie-Lexicon, 7. Edition, Franckh'sche Verlagshandlung, W. Keller & Co., Stuttgart, 1973, page 1831, "a derived name of *compounds of higher order,* which originate from the combination of *molecules*, - unlike compounds of first order, in the creation of which atoms participate.

The process according to the present invention starts with step (i), in which a dialkyl magnesium or a magnesium dihalide is reacted with a polyhydric alcohol $R'(OH)_m$ or a mixture thereof with a monohydric alcohol R'OH. The use of a polyhydric alcohol $R'(OH)_m$ improves both the activity and the morphology of the catalyst component compared to the use of a monohydric alcohol alone. It is also possible to react all magnesium compounds (a) separately with a monohydric alcohol or a polyhydric alcohol, or a mixture of them. In the formulas, each R' can be the same or different.

Typical polyhydric alcohols are ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, glycerol, trimethylol propane and pentareythritol. The polyhydric alcohol can be selected on the basis of the activity and morphology it gives the catalyst component. Thus, for example, ethylene glycol

gives a high activity catalyst component, large polymer (PP) particles and a broad polymer particle size distribution. Compared to ethylene glycol, 2-butyl-2-ethyl-1,3-propanediol gives a moderate activity, small polymer particles and a very narrow polymer particle size distribution.

According to one embodiment of the present invention, the polyhydric alcohol has the formula $R'(OH)_m$, wherein R' is a di-, tri- or tetravalent $C_2$-$C_{16}$ alkyl group and m is an integer selected from 2, 3, 4, 5 and 6. Preferably, R' is a divalent or a trivalent $C_2$-$C_{16}$ alkyl group and m is an integer selected from 2 and 3. Most preferably the polyhydric alcohol is selected from the group consisting of ethylene glycol and 2-butyl-2-ethyl-1,3-propanediol. By valence is understood the number of bonds that an atom can form (Stanley H. Pine, Organic Chemistry, 5. edition, McGraw-Hill, Inc., New York, 1987, page 10).

The amount of polyhydric alcohol may vary a lot, depending on the used amounts of magnesium compound (a), dicarboxylic acid dihalide (c) and the reactive halogenated hydrocarbon (e) described below. While the polyhydric alcohol certainly reacts with the magnesium compound, it may also be involved in reaction with the dicarboxylic acid dihalide (c), and/or even with the reactive halogenated hydrocarbon (e) described below. According to a preferred embodiment, said magnesium compound (a) is in step (i) reacted with said polyhydric alcohol $R'(OH)_m$ in a molar ratio $Mg/R'(OH)_m$ of between 1:1 and 1:0.25, preferably between about 1:0.8 and about 1:0.3.

Even better results are obtained if in step (i), said magnesium compound (a) is reacted with at least two of said alcohols (b). It is preferable to use as said at least one alcohol (b) a mixture of at least one monohydric alcohol R'OH and at least one polyhydric alcohol $R'(OH)_m$.

According to an embodiment of the invention, said magnesium compound (a) is reacted separately with at least one monohydric alcohol R'OH and at least one polyhydric alcohol $R'(OH)_m$. The intermediate solutions obtained are further reacted with said at least one dicarboxylic acid dihalide. These solutions are then mixed and the mixture is reacted with said at least one titanium tetrahalide.

Typical $C_1$-$C_5$ monohydric alcohols are methanol, ethanol, n-propanol; iso-propanol, n-butanol, iso-butanol, sec.butanol, tert.butanol, n-amyl alcohol, iso-amyl alcohol, sec.amyl alcohol, tert.arnyl alcohol, diethyl carbinol, akt. amyl alcohol, sec. isoamyl alcohol, tert.butyl carbinol. Typical $C_6$-$C_{10}$ monohydric alcohols are hexanol, 2-ethyl-l-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. Typical $>C_{10}$ monohydric alcohols are n-1-undecanol, n-1-dodecanol, n-1-tridecanol, n-1-tetradecanol, n-1-pentadecanol, 1-hexadecanol, n-1-heptadecanol and n-1-octadecanol. The monohydric alcohols may be unsaturated, as long as they do not act as catalyst poisons.

Preferable monohydric alcohols are those of formula R'OH in which R' is a $C_2$-$C_{16}$ alkyl group, most preferably a $C_4$-$C_{12}$ alkyl group, like 2-ethyl-1-hexanol.

The quality and quantity of monohydric alcohol relative to the amount of magnesium compound (a) may vary a lot, depending on the used quality and quantity of polyhydric alcohol, magnesium compound (a), dicarboxylic acid dihalide (c) and reactive halogenated hydrocarbon (e). The molar ratio Mg/R'OH is preferably between about 1:5 and about 1:1, more preferably between about 1:4 and about 1:1, most preferably between about 1:2.5 and about 1:1.5.

The dialkyl magnesium (a) used in step (i) has the formula $R_2Mg$ or RMgOR, wherein each one of the two R: s is a similar or different $C_1$-$C_{20}$ alkyl, preferably a similar or different $C_4$-$C_{12}$ alkyl. Typical magnesium alkyls are ethylbutyl magnesium, dibutyl magnesium, dipropy magnesium, propylbutyl magnesium, dipentyl magnesium, butylpentylmagnesium, butyloctyl magnesium and dioctyl magnesium. Typical alkyl-alkoxy. magnesium compounds are ethyl magnesium butoxide, magnesium dibutoxide, butyl magnesium pentoxide, magnesium dipentoxide, octyl magnesium butoxide and octyl magnesium octoxide. Most preferably, one R of the suitable formula $R_2Mg$ is a butyl group and the other R is an octyl group, i.e. the dialkyl magnesium compound is butyl octyl magnesium. When used as said magnesium compound (a), the preferred magnesium dihalide is magnesium dichloride $MgCl_2$.

It is also possible to use both a magnesium dihalide and a dialkyl magnesium for example as follows:

$$MgCl_2 + 4ROH \rightarrow MgCl_2 \cdot 4ROH$$

$$MgCl_2 \cdot 4ROH + 2MgR'''_2 \rightarrow MgCl_2[Mg(OR)_2]_2 + 4R'''H$$

The reaction conditions used in step (i) of the claimed process may be varied according to the used reactants and agents. The conditions should be adjusted to give sufficiently of said reaction product (ab) between the magnesium compound (a) and said alcohol(s) (b). According to an embodiment of the present invention, said magnesium compound (a) is reacted with said at least one alcohol (b), under at least one of the following conditions:

- at raised temperature, preferably at about 30 °C to about 80 °C,

- for a period of about 10 min to about 90 min, preferably about 30 min,
- in the presence of a $C_5$-$C_{10}$ hydrocarbon solvent, preferably heptane.

In addition to the above embodiments of step (i), other variations and reactions may also be used to produce said first intermediate (ab), still being within the present scope of protection. Thus, with respect to step (i), the scope of protection should be interpreted under the doctrine of equivalence on the basis of what a skilled person could have done to achieve said first intermediate (ab).

According the invention, the product of step (i), or a similar composition, i.e. said first intermediate (ab), is in a succeeding step (ii) reacted with a dicarboxylic acid dihalide (c) of the formula (1) to give a second intermediate (abc), and said second intermediate (abc) is in a third step (iii) reacted with a titanium tetrahalide $TiX''_4$ (d) wherein X" is a halogen.

The formula (1) of the dicarboxylic acid dihalide is:

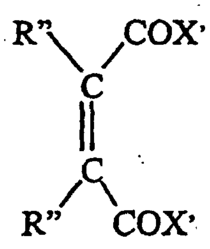

(1)

wherein each R" is a similar or different $C_1$-$C_{20}$ hydrocarbyl group or both R":s form together with the two unsaturated carbons seen in the formula a $C_5$-$C_{20}$ aliphatic or aromatic ring, and X' is a halogen.

Among non-cyclic dicarboxylic acid dihalides, the group consisting of maleic . acid dihalide, fumaric acid dihalide and their R" substituted derivatives such as citraconic acid dihalide and mesaconic acid dihalide, respectively, are the most important. As the invention aims at converting the dicarboxylic acid dihalides into their corresponding di-, oligo- or polyesters, and the di-, oligo- or polyesters as internal electron donors have to be coordinable with the magnesium dihalide and the titanium tetrahalide of the catalyst component, the cis-isomeric maleic acid dihalide and its derivatives, such as citraconic acid dihalide, are more advantageous.

However, in order to obtain a catalyst with exceptionally high activity, the R":s of formula (1) should form together with the two unsaturated carbons seen in the formula a $C_5$-$C_{20}$ aliphatic or $C_{6-20}$ aromatic ring. Among the cyclic dicarboxylic acid dihalides, the group consisting of phthalic acid dihalide (1,2-benzene dicarboxylic acid dihalide), its hydrogenate 1,2-cyclohexane dicarboxylic acid dihalide, and their derivatives, is the most important. Most preferably, said dicarboxylic acid dihalide (c) is phthaloyl dichloride.

The amount of the dicarboxylic acid dihalide (c) may vary, a lot; depending on the amount of alcohol (b) used in step (i) and the amount of alkoxide present in said first intermediate (ab). It is within the scope of protection of the present patent to adjust the amounts in order to react said intermediate with said dicarboxylic acid dihalide. According to a preferred embodiment of the present invention, in step (ii), said first intermediate (ab) is reacted with . said dicarboxylic acid halide (c) in a molar ratio $Mg_{total\ added}$/(c) of between 1:1 and 1:0.1, preferably between about 1:0.6 and about 1:0.25.

The reaction conditions of step (ii) of the claimed process may vary according to the used components and their amounts. However, they should be adjusted to give sufficiently of said reaction product (abc) between said intermediate (ab) and said dicarboxylic acid dihalide (c). According to an embodiment of the present invention, in step (ii), said first intermediate (ab) is reacted with said dicarboxylic acid dihalide (c), under at least one of the following conditions:

- adding said dicarboxylic acid dihalide (c) under room temperature and heating the obtained reaction mixture,
- keeping the reactants together at raised temperature, preferably at about 30 °C to about 80 °C,
- keeping the reactants together for a period of about 10 min to about 90 min, preferably about 30 min,
- reacting the reactants in the presence of a $C_5$-$C_{10}$ hydrocarbon solvent, preferably heptane.

Usually, a $C_5$-$C_{10}$ hydrocarbon solvent is used in step (ii). Then, it is preferable, that, after said first intermediate (ab) has been reacted with said dicarboxylic acid dihalide (c), the $C_5$-$C_{10}$ hydrocarbon solvent is removed by evaporation, e.g. that heptane is used and removed at about 100 °C to about 110 °C.

In the invention, it was found that the addition of at least one reactive halogenated hydrocarbon (e) during

the process, i.e. in any of the above steps (i) to (iii), led to a further improved catalytic activity. The reactive halogenated hydrocarbon (e) has the , formula (2)

$$R'''X'''_n \qquad (2)$$

wherein R''' is an n-valent $C_1$-$C_{20}$ hydrocarbyl group, X''' is a halogen and n is an integer selected from 1, 2, 3 and 4.

Such chlorinated hydrocarbons are, e.g., monochloromethane, dichloromethane, trichloromethane (chloroform), tetrachloromethane, monochloroethane, 1,1-dichloroethane, 1,2-dichloroethane, 1,1,1-trichloroethane, 1,1,2-trichloroethane, 1,1,1,2-tetrachloroethane, 1,1,2,2-tetrachloroethane, pentachloroethane, hexachloroethane, 1-chloropropane, 2-chloropropane, 1,2-dichloropropane, 1,3-dichloropropane, 1,2,3-trichloropropane, 1-chlorobutane, 2-chlorobutane, isobutyl chloride, tert.butyl chloride, 1,4-dichlorobutane, 1-chloropentane, 1,5-dichloropentane. The chlorinated hydrocarbons of the invention may also be unsaturated, provided that the unsaturation does not act as catalyst poison in the final catalyst component.

In said reactive halogenated hydrocarbon (e) having the above formula (2), R''' is preferably a mono-or bivalent $C_1$-$C_{10}$ hydrocarbyl group, independently, X''' is preferably chlorine and, independently, n is preferably 1 or 2. Preferably said hydrocarbyl halide (e) is a butyl chloride (BuCl). or a dichloroalkane like 1,4-dichlorobutane, more preferably tertiary butyl chloride or a dichloroalkane like 1,4-dichlorobutane, most preferably a dichloroalkane like 1,4-dichlorobutane.

It was also found, that especially good results were obtained, if said reactive halogenated hydrocarbon (e) is added in an amount corresponding to a molar ratio $Mg_{total\ added}$/(e) of between 1:0.2 and 1:20, preferably between about 1:1 and about 1:4.

Said reactive halogenated hydrocarbon (e) can be added in any of steps (i) to (iii). Preferably it is added in connection with step (ii). This means that in the process, it is preferably added immediately before the dicarboxylic acid dihalide (c), together with it or immediately after it. As there is a possibility that the reactive halogenated hydrocarbon (e) may disturb the conversion of the dicarboxylic acid dihalide into said dicarboxylic acid di-, oligo- or polyester donor, it is most preferably added immediately after the addition of the dicarboxylic acid dihalide (c). The symbols (ab) and (abc) may or may not include the added or reacted reactive halogenated hydrocarbon (e). The symbols do not limit the reactants leading to the corresponding intermediates to (a), (b), (c) and (d).

As was said above, it is preferable to add said reactive halogenated hydrocarbon (e) in connection with and preferably after the dicarboxylic acid dihalide (c), i.e. at the end of step (ii). Most preferably, after said preferable $C_5$-$C_{10}$ hydrocarbon solvent, such as heptane, has been removed by evaporation after step (ii), said second intermediate (abc) is contacted with said reactive halogenated hydrocarbon (e). A convenient contacting period is about 10 min to about 90 min, preferably about 30 min.

In the reaction sequence (i)→(ii)→(iii), after said second intermediate (abc) has been contacted with said reactive halogenated hydrocarbon (e), preferable in step (ii), a dissolving $C_5$-$C_{10}$ hydrocarbon, such as toluene, is preferably added. Without limiting the scope of patent protection, the hydrocarbon is believed to dissolve the reaction product and/or the lower the viscosity of its solution, thus making the intermediate (abc, including (e)) more available for reaction with the titanium tetrahalide $TiX''_4$ (d) in the succeeding step (iii). Most preferably molar ratio $Mg_{total\ added}$/toluene of between about 1:2 and about 1:10 is used in the addition.

In step (iii), the magnesium compound/alcohol/dicarboxylic acid dihalide. reaction product (abc) is reacted with at least one titanium tetrahalide $TiX''_4$ (d), wherein X" is a halogen. Equivalent with said titanium tetrahalide is the combination of an alkoxy titanium halide and a halogenation agent thereof, which are able to form a titanium tetrahalide *in situ*. However, the most preferred titanium tetrahalide (d) is titanium tetrachloride.

The amount of titanium tetrahalide may vary a lot and depends e.g. on the manner of contacting it with said intermediate (abc). If the titanium tetrahalide is added to the intermediate, a large stoichiometric excess thereof is not needed. If, however, the intermediate, or solution thereof, are added e.g. dropwise to the titanium tetrahalide, a large stoichiometric excess of the last mentioned is preferred. Within the scope of the claimed process, the amount of titanium tetrahalide may be optimized to give a suitable catalyst. Most preferably, in step (iii), said second intermediate (abc) is added into and reacted with said titanium tetrahalide (d) in a molar ratio $Mg_{total\ added}$/(d) of between 1:100 and 1:1, preferably between about 1:50 and about 1:5, most preferably about 1:10.

As was said before, both .order of contacting between said intermediate (abc) and said titanium tetrahalide give satisfactory results and may be applied to the present invention. When using the reaction sequence (i)→(iii), it is preferable if in step (iii), said second intermediate (abc), more preferably a solution thereof, is added slowly, most preferably dropwise, to said titanium tetrahalide (d) to form a solution of said catalyst component Thereby, the titanium tetrahalide is preferably hot, most preferably at 110 °C. The best results are obtained, if in step (iii), a toluene solution of said second intermediate (abc) is added dropwise to said titanium tetrahalide (d) at 110 °C. The corresponding

reaction time is preferably about 5 min to about 20 min, most preferably about 10 min.

After the reaction sequences (i)→(ii)→(iii), the reaction product, which is a precursor of, or a crude version of said catalyst component, is recovered in a recovery step (iv). The reaction product is preferably recovered by continously cooling a solution of said catalyst component, most preferably said toluene solution of said catalyst component, for the precipitation of the catalyst component in crude form or as said precursor and allowing it to settle. Immediately before said precipitation, preferably a $C_5$-$C_{10}$ hydrocarbon solvent, more preferably toluene, most preferably toluene in a molar ratio $Mg_{total\ added}$/toluene of about 1:10 to about 1:100, is added to said catalyst component solution. After the crude catalyst component or said precursor has settled, the supernatant liquid is removed e.g. by decantering or siphoning.

After the recovery step (iv), said catalyst component in crude form or said precursor is optionally washed in a washing step (v). By precursor is meant a reaction product, which still is not in the form of the final catalyst component. This state of thing derives from the nature of the reaction product, which may be a larger complex (see definition above) or mixture consisting of or containing one or several molecules and/or smaller complexes. Because of the loose structure of such a larger complex or complex mixture, washing will remove some of the complexes and/or molecules and essentially change the composition of the remaining solid product.

It is preferable if, in step (v), said recovered catalyst component in crude form or said catalyst component precursor is washed with toluene, preferably with hot (e.g. 90 °C) toluene. It is further preferable, if in step (v), said recovered crude catalyst component, said recovered precursor or said preliminary washed catalyst component is washed with heptane, most preferably with hot (e.g. 90 °C) heptane. Yet further, it is preferable, if in step (v), said recovered crude catalyst component, said recovered precursor or said preliminary washed catalyst component is washed with pentane. A washing step (v) typically includes several substeps which gradually increase the magnesium dihalide content of the catalyst precursor. Such a washing sequence is, for example, one wash with toluene at 90 °C, two washes with heptane at 90 °C and one wash with pentane at room temperature.

The washing can according to the invention be optimized to give a catalyst with novel and desirable properties. Thus in step (v) said recovered catalyst component is preferably washed to give the following ratio of said magnesium dihalide, said titanium tetrahalide, and said dicarboxylic acid di-, oligo- or polyester as internal electron donor ED (3):

$$(MgX_2)_{8\text{-}10}(TiX''_4)_1(ED)_{0.7\text{-}1.3} \qquad (3)$$

wherein $MgX_2$ is said magnesium dihalide, $TiX''_4$ is said titanium tetrahalide, and ED is said dicarboxylic acid di-, oligo- or polyester as internal electron donor, preferably a phthalic acid di-, oligo- or polyester. X and X" are preferably Cl.

Finally, the washed catalyst component is usually dried, preferably by evaporation.

In appendices 1 and 2 are described the schemes of eight (sixteen) embodiments of the present invention; four (eight) starting from a magnesium dihalide $MgX_2$ and four (eight) starting from a dialkyl magnesium $R_2Mg$.

In addition to the above described process, the invention also relates to an olefin polymerization catalyst component comprising a magnesium dihalide, a titanium tetrahalide, and a dicarboxylic acid ester as internal electron donor. ED, which has been prepared according to the above described process. By said catalyst component is meant the so called procatalyst component, i.e. the transition metal component of the whole olefin catalyst system, which catalyst system additionally includes a so called cocatalyst, i.e. an organic compound of a non-transition metal, and optionally a so called external electron donor.

An advantageous embodiment of the catalyst component according to the present invention comprises a magnesium dihalide, a titanium tetrahalide, and a dicarboxyl acid ester as internal electron donor ED and has the following ratio of said magnesium dihalide, said titanium tetrahalide, and said dicarboxylic acid ester as internal electron donor ED (3):

$$(MgX_2)_{8\text{-}10}(TiX''_4)_1(ED)_{0.7\text{-}1.3} \qquad (3)$$

wherein $MgX_2$ is said magnesium dihalide, $TiX''_4$ is said titanium tetrahalide and ED is said dicarboxylic acid ester as internal electron donor, preferably a phthalic acid di-, oligo- or polyester. Especially, this applies for X = X" = Cl. This composition gives the highest activity. Preferably, the catalyst component is a complex having the formula (3).

When using a polyol $R'(OH)_m$, wherein R' is an m-valent $C_1$-$C_{20}$ hydrocarbyl group and m is an integer selected from 2, 3, 4, 5 and 6, according to the present invention, its morphology can conveniently be adjusted to give olefin polymers of various desired particle sizes and particle size distributions (PSD). As was said above, the polyhydric alcohol can be selected on the basis of the activity and morphology it gives to the catalyst component. Thus ethylene glycol gives a high activity catalyst component, large polymer (PP) particles and a broad polymer particle size distribution, whereas 2-butyl-2-ethyl-1,3-propanediol gives a moderate activity, small polymer particles and a very narrow particle size distribution.

When adding during the preparation process of the claimed catalyst component a reactive halogenated hydrocarbon (e) of the formula (2)

$$R'''(X''')_n \qquad (2)$$

wherein R''' is an n-valent $C_1$-$C_{20}$ hydrocarbyl group, X''' is a halogen and n is an integer selected from 1, 2, 3 and 4, the product will preferably contain more halogen than was to be expected on the basis of the $MgX_2$ and $TiX_4$ present. Preferably, when the halogen is chlorine, the claimed catalyst component might contain chlorine from about 10% to about 60% more than the amount of chlorine calculated on the basis of the amounts of magnesium and titanium present, assuming that all of the magnesium is in the form of said $MgCl_2$ and essentially all of the titanium is in the form of said $TiCl_4$.

In the claimed catalyst component, the magnesium halide (X - Cl) structure has an X-ray diffraction pattern which differs from the X-ray diffraction pattern of pure $MgCl_2$. It preferably shows an X-ray diffraction pattern with a lamellar thickness indicating peak at 17° 2Θ, showing a clear position shift compared to normal amorphous $MgCl_2$ which gives a height indicating peak at 15° 2Θ. Indeed, according to J. Dorrepaal et al. (J. Appl.Crystallography, 1984 17, page 483), the crystal structure of $MgCl_2$ is characterized by a=3,640 Å and C=17,673 Å. In an X-ray diffraction pattern the peak at about 15° 2Θ is in the direction (003) of the c-axis, i.e. describing the height to the hexagonal unit cell, when Cu Kα radiation is used.

In addition to the above described process and catalyst component, the invention also relates to a process for the polymerization of olefins. The process is characterized by the steps of

(A) preparing in solution an olefin catalyst component by

(i) reacting at least one magnesium compound (a), selected from the group consisting of a dialkyl magnesium $R_2Mg$, wherein each R is a similar or different $C_1$-$C_{20}$ alkyl, and a magnesium dihalide $MgX_2$, wherein X is a halogen, with at least one alcohol (b), selected from the group consisting of a mixture of at least one monohydric alcohol R'OH and at least one polyhydric alcohol $R'(OH)_m$, and at least one polyhydric alcohol $R'(QH)_m$, wherein R' is an 1-valent or, respectively; an m-valent $C_1$-$C_{20}$ hydrocarbyl group and m is an integer selected from 2, 3, 4, 5 and 6, to give a first intermediate (ab), and

(ii) reacting said first intermediate (ab) with at least one dicarboxylic acid dihalide (c) which forms essentially all of the dicarboxylic acid di-, oligo- or polyester and has the formula (1):

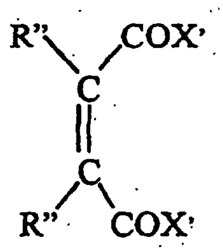

(1)

wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen, to give a second intermediate (abc), and

(iii) reacting said second intermediate (abc) with at least one titanium tetrahalide $TiX''_4$ (d) wherein X" is a halogen, or

(ii') reacting said first intermediate (ab) with at least one titanium tetrahalide $TiX''_4$ (d) wherein X" is a halogen, to give an alternative second intermediate (abd), and

(iii') reacting said alternative second intermediate (abd) with at least one dicarboxylic acid dihalide (c) which forms essentially all of the dicarboxylic acid di-oligo- or polyester and has the formula (1):

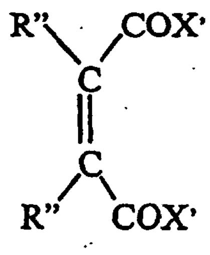

(1)

wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen,

(iv) recovering by precipitation said catalyst component in crude form, or a precursor of said catalyst component, and

(v) optionally washing said crude catalyst component or said precursor, to give said catalyst component,

(B) feeding to at least one polymerization reactor said catalyst component, as well as a cocatalyst, which has the formula (4)

$$R_pAl_rX_{3r-p} \qquad (4)$$

wherein R is a $C_1$-$C_{10}$ alkyl, preferably a $C_1$-$C_4$ alkyl, most preferably ethyl, X is a halogen, preferably chlorine, p is an integer from 1 to (3r-1), preferably 2 or 3, most preferably 3, and r is 1. or 2, preferably 1, the molar ratio between said catalyst component and said cocatalyst, expressed as Al/Ti, preferably being 10-2000, more preferably 50-1000, most preferably 200-500,
optionally an external electron donor, which preferably is a silane, more preferably a $C_1$-$C_{12}$ alkyl $C_1$-$C_{12}$ alkoxy silane, most preferably cyclohexyl methyl dimethoxy silane,
optionally a $C_4$-$C_{10}$ hydrocarbon solvent, preferably pentane, hexane and/or heptane,
preferably a chain transfer agent, which is hydrogen, and
at least one olefin monomer, which preferably is propylene,

(C) carrying out the polymerization of said olefin monomer in said at least one polymerization reactor to give an olefin polymer (= homopolymer or copolymer) and

(D) recovering said olefin polymer.

In the claimed olefin polymerization process, the used (transition metal) catalyst component can be prepared according to any above described embodiment of the catalyst component preparation process.
According to, one further embodiment of the invention, olefins are polymerized by the steps of

(A) providing a solid olefin polymerization catalyst component which is essentially homogenous and comprises a magnesium dihalide, a titanium tetrahalide, and a dicarboxylic acid di-, oligo- or polyester as internal electron donor ED in the following ratio (3):

$$(MgX_2)_{8-10}(TiX''_4)_1(ED)_{0.7-1.3} \qquad (3)$$

wherein $MgX_2$ is said magnesium dihalide, $TiX''_4$ is said titanium tetrahlaide, X and/or X" is preferably Cl, and ED is said dicarboxylic acid di-, oligo- or polyester as internal donor, preferably a phthalic acid di-, oligo- or polyester,

(B) feeding to at least one polymerization reactor said catalyst component, as well as a cocatalyst which has the formula (4)

$$R_pAl_rX_{3r-p} \quad (4)$$

wherein R is is a $C_1$-$C_{10}$ alkyl, preferably a $C_1$-$C_4$ alkyl, most preferably ethyl, X is a halogen, preferably chlorine, p is an integer from 1 to (3r-1), preferably 2 or 3, most preferably 3, and r is 1 or 2, preferably 1, the molar ratio between said catalyst component and said cocatalyst, expressed as Al/Ti, preferably being 10-2000, more preferably 50-1000, most preferably 200-500,
optionally an external electron donor, which preferably is a silane, more preferably a $C_1$-$C_{12}$ alkyl - $C_1$-$C_{12}$ alkoxy silane, most preferably cyclohexyl methyl dimethoxy silane,
optionally a $C_4$-$C_{10}$ hydrocarbon solvent, preferably pentane, hexane and/or heptane,
preferably a chain transfer agent, which is hydrogen, and
at least one olefin monomer, which preferably is propylene,

(C) carrying out the polymerization of said olefin monomer in said at least one polymerization reactor to give an olefin polymer (= homopolymer or copolymer) and

(D) recovering said olefin polymer.

The invention is described below by means of examples, the purpose of which merely is to illustrate the invention.

## Examples

The following figures illustrate the examples:

Figure 1 shows an example of a regular amorphous $MgCl_2$ X-ray diffraction pattern of a polymer prepared by using a catalyst according to the invention.

Figure 2 shows the IR spectrum of a catalyst

Figure 3 shows the activity of the PDC catalysts as a function of their Mg/Ti molar ratio.

Figure 4 shows a simplification of the washing procedure in the examples when going from example 6 to examples 7, 8 and 9.

Figure 5 shows the X-ray diffraction pattern of the catalyst of example 7.

Figure 6 shows the IR spectrum of the catalyst prepared in example 6.

Figure 7 shows the particle size distribution (PSD) of a propene polymer that was obtained when using the catalyst of example 7 in a test polymerization.

Figure 8 shows the Ti % in some catalyst according to the invention.

Figure 9 shows the per cent of polymer (= di, oligo or polyester), calculated as 100 % - % known species, correlated to the number of -OH groups in the added alcohol.

Figure 10 shows the molar proportions of Ti:Mg:Donor in the catalysts.

Figure 11 shows the activity in bulk polymerization of the catalysts in kg PP/g cat units.

Figure 12a shows the particle size distribution (PSD) setup for the polymer obtained with the catalyst of example 9.

Figure 12b shows the particle size distribution (PSD) setup for the polymer obtained with the catalyst of example 10.

Figure 12c shows the particle size distribution (PSD) setup for the polymer obtained with the catalyst of example 11.

Figure 12d shows the particle size distribution (PSD) setup for the polymer obtained with the catalyst of example 12.

Figure 12e shows the particle size distribution (PSD) setup for the polymer obtained with the catalyst of example 13.

Figure 13 shows an X-ray diffraction pattern of a catalyst according to the invention.

The following chemicals, chemical characterization of the catalyst components, bulk polymerisation conditions and characterization of the polymers were used in all examples.

**Chemicals used in the examples**

The magnesium alkyl ($MgR_2$) used was BOMAG-A® from Schering which was a 20% heptane solution of butyloctylmagnesium $(n\text{-}C_4H_9)_{1.5}(n\text{-}C_8H_{17})_{0.5}Mg$ with a magnesium content of 2.92% and a density of $\zeta$=0.729 g/ml. Dry 2-ethyl-1-hexanol (EHA) (>99%) was used as a monohydric alcohol. 2-butyl-2-ethyl-1,3-propanediol (BEPD) was used as a first dihydric alcohol (99%). Ethylene glycol (EG) was used as a second dihydric alcohol. Glycerol (GLY) was used as a trihydric alcohol. 1,2-phthaloyldichloride (PDC) (>95%) was dried and used as chlorination agent 1-chlorobutane (butylchloride) (BuCl) was dried and used as a reactive halogenated hydrocarbon. Titanium tetrachloride was used as such as a titanation agent ($TiCl_4$). Further, toluene, heptane ($C_7$), pentane ($C_5$), nitrogen gas ($N_2$) and silicon oil 200/5 were used.

A 100% solution of triethylaluminium (TEA) was used as cocatalysts in the bulk polymerizations. Cyclohexyl methyl dimethoxy silane (CMDS) was used as external donor in the polymerizations.

**Chemical characterization of the catalyst components**

The catalyst components were characterized with respect to their chemical composition by measuring their Mg, Ti and Cl content The Mg and Ti analysis was started by dissolving the samples in a mixture of nitric and hydrofluoric acid. The metal was measured by flame atomic absorption with a nitrous oxide/acetylene flame. Chloride was determined after dissolution in diluted sulphuric acid by potentiometric titration with a standard silver nitrate solution.

The determination of the phthalic esters (diethylphtnalate DEP and dioctylphtnalate DOP) and the phthalic anhydride (PA) were done by first dissolving the sample in acetone. The samples were filtered and run by solution chromatography (HPLC). Each component was identified by comparing the respective retention time and nitra violet (UV) spectra with standard components.

To check the conversion rate of the ethanol (EtOH), 2-ethyl-hexanol (EHA), or other alcohol added in the synthesis, the alcohol content of the catalysts were measured by gas chromatography (GC). A Hewlett Packard 5890 GC with a 60 m DB-1 column was used for the GC analyses. The column had an diameter of 0.25 mm with a film thickness of 1 $\mu$m. An FID detector was used.

The WAXS X-ray diffraction patterns were collected in reflection mode between 2and 70° 2 $\Theta$ with a Siemens D500 instrument. The $CuK_\alpha$ radiation wavelength was 1.54 Å.

The IR spectra were taken by a Nicolet 510 FTTR equipment with 2 $cm^{-1}$ resolution.

**Bulk polymerization of propene**

Propene was polymerized in a stirred tank reactor having a volume of 5 1. TEA as a cocatalyst, CMDS as an external donor and 30 ml of n-pentane were mixed and allowed to react for 5 minutes. Half of the mixture was added to the polymerization reactor and the other half was mixed with said catalyst component After additional 5 minutes the catalyst/TEA/CMDS/n-pentane mixture was introduced into the reactor. The Al/Ti mole ratio was 250 and the Al/CMDS mol ratio was 10 mol/mol. 70 mmol hydrogen and 1400 g of propene were introduced into the reactor and the temperature was raised within 15-30 minutes to 70°C. The polymerization time was 60 minutes.

**Characterization of the polymers**

The polymers were characterized with respect to their melt flow rate ($MFR_2$), bulk density (BD) and the fraction of total solubles in xylene (XS). The MFR (g/10 min) was measured by using the standard ISO 1133 (2.16 kg load, 230°C). The bulk density (in $kg/m^3$) of the material was measured from a 100 ml cylinder. The amount of total xylene solubles (in wt-%) was measured by dissolving a polymer sample in 250 ml of boiling xylene, precipitating the isotactic material at 25 °C and evaporating the solvent from the soluble sample fraction.

**Examples 1 to 4**

The setup of the examples is listed in Table 1.

Table 1

| The experimental setup for examples 1-4. Examples 1 and 3 were comparative. | | | | | |
|---|---|---|---|---|---|
| **Example** | **$MgR_2$/ROH** | **Diol** | **BuCl** | **Mg/Ti** | **Mg/PDC** |
| 1(comparative) | 1:2 | No | No | 1:10 | 1:1 |
| 2 | 1:2 | Yes | Yes | 1:10 | 1:0,5 |
| 3(comparative) | 1:3 | No | Yes | 1:2 | 1:0,5 |
| 4 | 1:3 | Yes | Yes | 1:10 | 1:0,5 |

In example 1 (comparative), no butyl chloride was used. In examples (comparative) I and 3, no diol was used. The synthesis was started by introducing 35 mmol of $MgR_2$ (BOMAG-A®) into a 100 ml glass reactor at room temperature. The molar ratio $MgR_2/C_7$ in this solution was 1:7.
In the next step EHA was added in a molar ratio $MgR_2$/EHA of 1:2 or 1:3 depending on the experimental setup. After the addition of EHA, the temperature was increased to 60 °C and the reactants were allowed to react with each other for 30 min. After this the reaction solution was cooled down to room temperature. Depending of the experimental setup, the second alcohol, i.e. the BEPD was introduced into the reactor. The $MgR_2$/BEPD molar ratio was 1:0.5. Again, the temperature was increased to 60 °C and the reactants were allowed to react with each other at this temperature for 30 min after which the temperature was lowered to room temperature.

The next reagent to be added was the ortho-phthaloyl dichloride (PDC). This chlorination agent was added in a Mg/PDC molar ratio of 1:1 or 1:0.5 according to Table 1. The temperature was increased to 60 °C and the reaction solution was kept at this temperature for 30 min. After this the temperature of the reaction solution was lowered to room temperature. Depending on the experimental setup the second chlorination agent, butylchloride (BuCl) was now added at a Mg/BuCl molar ratio of 1:1. Again the temperature was increased to 60 °C and the reaction solution was kept at this temperature for 30 min.

In examples 2 and 3 silicon oil was added as particle size modifier. It was introduced directly onto the hot solution. The molar ratio of the added silicon oil to magnesium was 5:1, calculated as mol silice per mol magnesium (Si/Mg).

A portion of toluene was added either to the hot Mg solution (examples 1 and 4) or to the receiving $TiCl_4$ solution (examples 2 and 3) to increase the solubility of the components. The $C_6H_5CH_3$/Mg molar ratio was 5:1.

While the Mg-solution was being prepared, a portion of $TiCl_4$ was introduced into a 250 ml thermostated glass reactor. The $TiCl_4$/Mg molar ratio was 2:1 or 10:1. A portion of $TiCl_3OEt$ was added to the $TiCl_4$ solution in examples 1, 2 and 3. The $TiCl_3OEt$/Mg molar ratio was 3:1. The temperature of this receiving solution was increased to 110 °C.

The Mg-solution was then added dropwise to this hot $TiCl_4$ solution. The whole addition took 20 min. After this the reactants were allowed to react with each other for 5 min (examples 2 and 4) or 1 h (examples 1 and 3).

After the components had reacted with each other, the reaction solution was allowed to cool down to 90 °C, after which 40 mol heptane ($C_7$) was added to precipitate the catalyst complex. After this the supernatant liquid was siphoned off.

The catalyst component was washed with toluene or a mixture of toluene and $TiCl_4$. The toluene wash was carried out at 90 °C for 20 min, under stirring. Then the catalyst component was washed two times at 90 °C for 10 min with heptane. The $C_7$/Mg molar ratio in these washes was 40: 1. Thereafter, the catalyst component was washed with pentane ($C_5$) for 10 min at room temperature. The $C_5$/Mg molar ratio was 50:1. Finally, the catalyst component was dried under a stream of nitrogen. All the catalyst were characterized chemically according to the description above and they were test polymerized as described above. All the results are listed in Table 2, in which examples 4a and 4b are parallel examples and EtOH stands for ethanol.

Table 2

| **Catalyst** | **Example 1*** | **Example 2** | **Example 3*** | **Example 4a** | **Example 4b** |
|---|---|---|---|---|---|
| Mg (wt-%) | 8.0 | 14.1 | 16.4 | 11.9 | 11.9 |
| Mg (mol/100 g catalyst) | 0.33 | 0.58 | 0.68 | 0.49 | 0.49 |

*) Comparative

Table 2 (continued)

| Catalyst | Example 1* | Example 2 | Example 3* | Example 4a | Example 4b |
|---|---|---|---|---|---|
| Ti (wt-%) | 5.8 | 1.8 | 2.5 | 3.1 | 3.1 |
| Ti (mol/100 g catalyst) | 0.12 | 0.04 | 0.05 | 0.07 | 0.07 |
| BEPD (wt-%) | | 0.27 | | 0.48 | 0.48 |
| BEPD (mol/100 g catalyst) | | 0.002 | | 0.003 | 0.003 |
| EHA (wt-%) | | 0.21 | 0.001 | 0.13 | 0.13 |
| EHA (mol/100 g catalyst) | | 0.002 | 0.001 | 0.001 | 0.001 |
| EtOH (wt-%) | | 0.76 | 0.27 | | |
| DEP (wt-%) | 8 54 | 1.42 | 1.27 | | |
| DEP (mol/100 g catalyst) | 0.038 | 0.006 | 0.006 | | |
| DOP (wt-%) | 28.4 | 16.8 | 11.1 | 33.6 | 33.6 |
| DOP (mol/100 g catalyst) | 0.073 | 0.043 | 0.028 | 0.086 | 0.086 |
| PA (wt-%) | 1.46 | 0.09 | | 0.9 | 0.9 |
| Mg (molar ratio) | 2.7 | 15.4 | 12.9 | 7.6 | 7.6 |
| Ti (molar ratio) | 1 | 1 | 1 | 1 | 1 |
| Donor (molar ratio) | 0.9 | 1.3 | 0.7 | 1.3 | 1.3 |
| Toluene (wt-%) | | 0.71 | 0.22 | 0.07 | 0.07 |
| C5 (wt-%) | | 1.02 | 0.46 | 0.37 | 0.37 |
| C7 (wt-%) | | 2.15 | 1.18 | 0.70 | 0.70 |
| Activ. (kg PP/g cat) | 4.8 | 7.00 | 10.6 | 26.6 | 26.1 |
| Activ. (kg PP/g Ti) | 83 | 389 | 424 | 858 | 842 |
| BD ($kg/m^3$) | 400 | 350 | 450 | 430 | 470 |
| $MFR_2$ (g/10 min) | 10.3 | 8.3 | 10.4 | 6.2 | 6.7 |
| XS (wt-%) | 2.4 | 1.7 | 1.6 | | 1.8 |

*) Comparative

The results of the catalyst synthesis show that:

1. BuCl greatly effects the Mg/Ti molar ratio.
2. There is an oligo- or polyester formation if a diol and a phthaloyl dichloride is used in the synthesis of the donor compound.
3. The presence of DOP in the precipitating $(MgCl_2)_xTiCl_4DOP$ complex favours the outcome of regular amorphous crystal structure of the complex $MgCl_2$.
4. Ethers are present in the $(MgCl_2)_xTiCl_4DOP$ catalyst complex.
5. BuCl greatly improves the catalyst activity.
6. Optimum composition of the catalyst complex is $(MgCl_2)_xTiCl_4DOP$, wherein X is from about 7 to about 10.
7. Activities of up to 27 kg PP/g cat are reached.

Most of the catalysts originating from a synthesis where PDC had been used showed a quite regular amorphous $MgCl_2$ X-ray diffraction pattern. As an example of these patterns the pattern of example 2 is shown in Figure 1. The 2 Θ-value is given in abscisse. Only. one of the catalysts belonging to this latter group showed a strongly disturbed X-ray pattern, while the rest of them followed nicely the above mentioned features. However one pattern (in Figure 13) showed an unusual halo between 18° and 22° 2 Θ reflecting the haloformation significant for $MgCl_2(Mg(OR)_2)_2$ complexes.

In all the IR spectra from the catalysts prepared out of PDC there were clear peaks indicating the presence of ether at 1080 $cm^{-1}$. In all these spectra there were also, clear peaks at 1860 and 1760 $cm^{-1}$ indicating the presence of an acid anhydride. An example of these spectra is shown in Figure 2 where the IR spectrum of the catalyst component of example 4 is shown. The wavenumber is shown in abscisse and the % of transmittance in ordinate. (1) peak indicates ether and (2) peak indicates acid anhydride.

It is believed that BuCl reduces the $TiCl_4$ content relative to the $MgCl_2$ content of the catalyst component. This can be seen in Figure 3 where the activities of the PDC catalysts are shown as a function of their Mg/Ti molar ratio. Here it can be seen that the three catalysts that has been chlorinated by BuCl are forming an own group in the

right upper corner of the figure, while the catalysts that have not been contacted with BuCl are forming a group in the lower left corner of the figure. The graph indicates that there is an optimum activity corresponding to an Mg/Ti molar ratio of 7-10. This finding is supported by an another result from examples 1-4 indicating that a moderate washing of the catalyst is optimum.

**Examples 5 to 8**

The experimental setups for examples 5-8 are listed in Tables 3-6. Example 4b was done for comparison. The chemicals used were identical to those used in examples 1-4, as well as the characterisation methods. The catalysts were polymerized according to the polymerization process described above.

In example 5 the amount of BuCl is increased to the double compared to example 4b. Example 6 was identical to example 5, but no heptane was added to the $TiCl_4$ solution. The principle of the catalyst washing in example 6 is shown in Figure 4, left column.

Example 7 was identical to example 6, but a larger part of the monoalcohol was replaced by the diol. Example 8 was a repetition of the third (example 7) with the exception that the mono and dihydric alcohols were mixed together and added to the catalyst synthesis in a joined addition step. The principle of the catalyst washing in examples 7-9 is shown in Figure 4, right column.

**Preparation of the catalyst components**

In the following, example 6 is described. The other examples were performed in a similar way. Into a 250 ml glass reactor was introduced 40 ml of a, 20% heptane solution of BOMAG-A® (35.01 mmol). Onto this was added 11.0 ml (70.01 mmol) of EHA. The temperature of the reaction solution was increased to 60 °C and the reactants were allowed to react with each other for 30 min. Then, 2.805 g (17.50 mmol) of BEPD was first heated with 2 ml of heptane in a septum bottle to 40 °C to obtain a feed solution. This solution was siphoned to the main reactor. To secure complete transfer, the septum bottle was rinsed with another portion of 1.5 ml of heptane that was also siphoned to the main reactor. Again the reactants were allowed to react for 30 min. 2.52 ml (17.50 mmol) ofPDC was introduced and allowed to react for 30 min. The last reagent when preparing the Mg complex solution was 4.000 ml (76.570 mmol) of BuCl that also was allowed to react for 30 min. 20 ml (187.8 mmol) of toluene was added as last step in the preparation of the Mg complex solution in order to decrease its viscosity.

The following step in the catalyst synthesis was the addition of the Mg complex into 38.48 ml (350.1 mmol) of $TiCl_4$. The addition was done dropwise, the $TiCl_4$ solution having a temperature of 110 °C. The catalyst was allowed to be formed in this solution for 5 min after which the $TiCl_4$ solution was allowed to cool down to 90 °C after which 110 ml of heptane was added (in examples 5 and 6) to improve the precipitation of the catalyst The reaction solution was kept at 90 °C for 20 min after which the catalyst was allowed to settle and the liquid was siphoned off. After this, the catalyst was washed twice with a 130 ml portion of a 10% $TiCl_4$ toluene solution at 90 °C for 30 min. Finally the catalyst was washed twice with 180 ml portions of heptane also at 90 °C for 30 min and lastly with a 150 ml portion ofpentane at room temperature for 15 min. The catalyst was dried from hydrocarbons under a stream of nitrogen.

In Tables 3-6, mol.ratio stands for molar ratio, stirr. stands for stirring time in minutes, settl. stands for settling time in minutes and 22→60 means that the temperature was risen from 20 to 60 °C. No stirring was used during the drying.

Table 3

| **Example 5** | **mol.ratio** | **mmol** | **ml** | **°C** |
|---|---|---|---|---|
| BOMAG-A® (20%/C7) _ | 1 | 35.01 | .40.0 | |
| EHA | 2 | 70.01 | 11.0 | |
| BEPD | 0.5 | 17.50 | | |
| PDC | 0.5 | 17.50 | 2.5 | |
| BuCl | 2.2 | 76.57 | 8.0 | |
| Toluene | | | 20.0 | |
| $TiCl_4$ (110°C) | 10 | 350.1 | 38.5 | |
| Principitation in C7 | 20 | 5 | | 90 |
| Washings: | stirr. (min) | settl. (min) | ml | °C |
| Toluene (+10% $TiCl_4$) | 30 | 5 | | |

Table 3 (continued)

| Example 5 | mol.ratio | mmol | ml | °C |
|---|---|---|---|---|
| Washings: | stirr. (min) | settl. (min) | ml | °C |
| C7 | 26 | 2 | | 90 |
| C7 | 28 | 2 | | 90 |
| C5 | 19 | 2 | | 22 |
| Drying ($N_2$) 46 min | | | | 22→60 |

Table 4

| Example 6 | mol.ratio | mmol | ml |
|---|---|---|---|
| BOMAG-A® (20%/C7) | 1 | 35.01 | 40.0 |
| EHA | 2 | 70.01 | 11.0 |
| BEPD | 0.5 | 17.50 | |
| PDC | 0.5 | 17.50 | 2.5 |
| BuCl | 2.2 | 76.57 | 8.0 |
| Toluene | | | 20.0 |
| $TiCl_4$ (110°C) | 10 | 350.1 | 38.5 |
| Washings: | stirr. (min) | settl. (min) | ml °C |
| Toluene (+10% $TiCl_4$) | 30 | 4 | 90 |
| C7 | 36 | 3 | 90 |
| C7 | 32 | 6 | 90 |
| C5 | 30 | 2 | 22 |
| Drying ($N_2$) 45 min | | | 22→60 |

Table 5

| Example 7 | mol.ratio | mmol | ml | |
|---|---|---|---|---|
| BOMAG-A® (20%/C7) | 1 | 35.01 | 40.0 | |
| EHA | 1.5 | 52.51 | 8.3 | |
| BEPD | 0.75 | 26.25 | | |
| PDC | 0,4 | 14,00 | 2,0 | |
| BuCl | 2,2 | 76,57 | 8,0 | |
| Toluene | | | 20,0 | |
| $TiCl_4$ (110°C) | 10 | 350,1 | 38,5 | |
| Washings: | stirr. (min) | settl. (min) | ml | °C |
| Toluene (+10% $TiCl_4$) | 36 | 5 | 130 | 90 |
| C7 | 30 | 3 | 150 | 90 |
| C7 | 30 | 3 | 145 | 90 |
| C5 | 30 | 3 | 150 | 22 |
| Drying ($N_2$) 45 min | | | | 22→60 |

Table 6

| Example 8 | mol.ratio | mmol | ml | |
|---|---|---|---|---|
| BOMAG-A® (20%/C7) | 1 | 35.01 | 40.0 | |
| EHA | 1.5 | 52.51 | 8.3 | |
| BEPD | 0.75 | 26.25 | | |

Table 6 (continued)

| Example 8 | mol.ratio | mmol | ml | |
|---|---|---|---|---|
| PDC | 0,4 | 14,00 | 2,0 | |
| BuCl | 2,2 | 76,57 | 8,0 | |
| Toluene | | | 20,0 | |
| $TiCl_4$ (110°C) | 10 | 350,1 | 38,48 | |
| Washings: | stirr. (min) | settl. (min) | ml | °C |
| Tol. (+10% $TiCl_4$) | 44 | | 140 | 90 |
| C7 | 25 | 27 | 150 | 90 |
| C7 | 30 | 7 | 150 | 90 |
| C5 | 30 | 9 | 155 | 22 |
| Drying ($N_2$) 37 min | | | | 22→60 |

The catalysts and. the polymers obtained were analyzed and characterized as described above for examples 1-4. The results are listed in Table 7.

Table 7

| Catalyst | Example 4b* | Example 5 | Example 6 | Example 7 | Example 8 |
|---|---|---|---|---|---|
| Mg (wt-%) | 11.5 | 8.8 | 13.4 | 13.4 | 12.6 |
| Mg (mol/100g catalyst) | 0.473 | 0.362 | 0.551 | 0.551 | 0.519 |
| Ti (wt-%) | 2.9 | 4.5 | 2.1 | 3.2 | 2.4 |
| Ti (mol/100g catalyst) | 0.061 | 0.094 | 0.044 | 0.067 | 0.050 |
| Cl (wt-%) | 45.8 | 40.4 | 48.5 | 47.3 | 45.3 |
| BEPD (wt-%) | 0.01 | 0.96 | 0.65 | 1.66 | 1.24 |
| BEPD (mol/100g catalyst ) | 0.000 | 0.006 | 0.004 | 0.010 | 0.008 |
| EHA (wt-%) | 0.24 | 0.45 | 0.44 | 0.33 | 0.33 |
| EHA (mol/100g catalyst) | 0.0018 | 0.0035 | 0.0034 | 0.0025 | 0.0025 |
| DOP (wt-%) | 35.5 | 41.8 | 34.7 | 21.9 | 21.1 |
| DOP (mol/100g catalyst) | 0.091 | 0.107 | 0.089 | 0.056 | 0.054 |
| PA (wt-%) | 1.0 | 0.8 | 1.7 | 1.2 | 1.0 |
| Mg (mol Mg/mol Ti) | 7.8 | 3.9 | 12.6 | 8.3 | 10.3 |
| Donor (mol Donor/mol Ti) ) | 1.5 | 1.1 1 | 2.0 | 0.8 | 1.1 |
| Toluene (wt-%) | 0.09 | 0.17 | 0.04 | 0.32 | 0.37 |
| C5 (wt-%) | 0.6 | 0.17 | 0.06 | 0.39 | 0.45 |
| C7 (wt-%) | 0.15 | 0.40 | 0.15 | 1.90 | 8.73 |
| Volatil, tot. (wt-%) | 0.84 | 0.74 | 0.25 | 2.61 | 9.55 |
| Activ. (kg PP/g cat) | 19.4 | 15.2 | 12.0 | 21.2 | 19.1 |
| Activ. (kg PP/g Ti) | 669 | 339 | 569 | 472 | 795 |
| BD ($kg/m^3$) | 470 | 400 | 290 | 310 | 300 |
| $MFR_2$ (g/10 min) | 6.5 | 7.2 | 10.5 | 8.0 | 8.9 |
| XS (wt-%) | | | 3.2 | 2.3 | 3.1 |

*) Comparison

The examples 5 to 8 show that very good morphology of the polymer material can be achieved if the heptane precipitation of the catalyst is left out from the catalyst synthesis. 65% of the polymer particles had a particle size between 0.5 and 1.0 mm. The catalyst yield in the catalyst synthesis was the same even if heptane precipitation was not used.

Increased amount of oligo or polyester ingredients added to the catalyst synthesis increased the amount of organic material in the catalyst from 2 to 10%.

X-ray diffraction patterns were taken from all catalysts. The characteristic features are a quite sharp peak at 50° 2Θ describing the broadness of the crystal plates and, a halo formation between 30° and 35° 2Θ describing the intermediate reflecting layers. There was however, a clear difference. In crystalline $MgCl_2$ there is an intensive peak at 15° 2Θ indicating the lamellar thickness. The position of this peak is the same also for amorphous $MgCl_2$ even if it is much lower. The results showed that there had been a clear shift of the lamellar thickness indicating peak in all the X-ray diffraction patterns coming from the catalysts in this test series. In Table 8 the position of the lamellar thickness indicating peak for the catalysts in this test series is listed. In all cases the peak had shifted upwards to the region of about 17° 2Θ. These results indicate that there is forming a new type of more tightly packed $MgCl_2$ crystals in the lamellar thickness direction in the material formed in the type of stoichiometric preparation route described here (see Figure 5).

The IR spectrum of the catalyst of example 6 is shown in Figure 6, and the PSD of the polymer from example 7 is shown in Figure 7, where sieve size (mm) is given in abscisse and the % of polymer in ordinate.

Table 8

| The position of the lamellar thickness indicating peak in the X-ray diffraction pattern for crystalline $MgCl_2$, amorphous $MgCl_2$ and for the catalysts of examples 5 to 8 | |
|---|---|
| **Material** | **Position of the lamellar thickness indicating peak** |
| Crystalline $MgCl_2$ | 15.0° 2Θ |
| Amorphous $MgCl_2$ | 15.0° 2Θ |
| Example 5 | 17.1° 2Θ |
| Example 6 | 17.0° 2Θ |
| Example 7 | 16.5° 2Θ |
| Example 8 | 16.1° 2Θ |

Example 8 16.1° 2Θ

Figure 6 shows the IR spectrum for the catalyst of example 6.

The polymerization results are listed in Table 9 together with a description of the polymer morphology.

Table 9

| The polymers and their bulk density | |
|---|---|
| **Example** | **Bulk density kg/ $m^3$** |
| 4b(Comparative) | 470 |
| 6 | 290 |
| 7 | 310 |
| 8 | 300 |

The first polymer (example 4b) showed a broad particle size distribution (PSD). The highest BD (470 kg/$m^3$) was seen in this material. The morphology improved greatly when the heptane addition was left out in the precipitation step. The improvement was seen already when preparing the catalyst, as a catalyst precipitate that had much better settling properties was achieved. The same improvement was then seen in the morphology of the polymer that was produced when using this catalyst in the test polymerization. Over 65% of the material of example 6 has a particle size that is between 0.5 mm and 1.0 mm. The amount of fines (defined as particles below 0.1 mm) is below 1 %. The amount of particles having a particle size of over 2 mm is also low, i.e. around 1%.

**Examples 9 to 13**

The experimental setups for examples 9-13 are listed in Tables 10-14 and the results are listed in Table 15.

**Preparation of the catalysts**

40.0 ml (35.01 mmol) of $MgR_2$ was added into a glass reactor. 11.0 ml (70.01 mmol) of EHA was added into the reactor and allowed to react with the $MgR_2$. The reactants were allowed to react with each other for 30 min. After

this, 17.50 mmol of the second alcohol component was added according to the description. To ensure full equilibrium, the reactants were allowed to react with each other for 30 min. 2.52 (17.50 mmol) of PDC was added and allowed to react for 30 min. The last component to be added in the Mg complex was BuCl, 4.00 ml (38.28 mmol) of this substance was added and allowed to react for 20 min. All reaction steps were carried out at a temperature of 60 °C. Last, the heptane of the $MgR_2$ solution was evaporated away at 107 °C and replaced with 10 ml (94 mmol) of toluene. The formed Mg complex was now added dropwise to 38.48 ml (350.1 mmol) of $TiCl_4$ at 110 °C. The components were allowed to react for 5 min after which 100 ml (938 mmol) of toluene was added. The components were allowed to react for 30 min after which mixing was stopped and the catalyst was allowed to settle. Both the settling time and the precipitate volume were recorded. After siphoning off the reaction solution, the catalyst was washed first with a 10 V-% $TiCl_4$ solution of toluene, twice with heptane and last with pentane. The washings were carried out as stated in Table 10. Finally the catalysts were dried under a stream of nitrogen.

Table 10

| **Example 9** | **mol.ratio** | **mmol** | | |
|---|---|---|---|---|
| BOMAG-A® (20%/C7) | 1 | 35.01 | 40.00 ml | |
| EHA | 2 | 70.01 | 11.00 ml | |
| BEPD | 0.5 | 17.50 | -2.81 g | |
| PDC | 0.5 | 17.50 | 2.52 ml | |
| BuCl | 1.1 | 38.285 4.00 | ml | |
| EVAPORATION | | condense | 30.33 g | |
| Toluene | | | 5 ml | |
| $TiCl_4$ (110°C) | 10 | 350.1 | 38.48 ml | |
| Washings: | stirr. (min) | settl. (min) | ml | °C |
| Settling | 0 | 15 | | 90...70 |
| Toluene | 30 | 30 | 130 | 90 |
| Toluene (+10% $TiCl_4$) | 45 | 970 | 120 | 90 |
| C7 | 35 | 10 | 180 | 90 |
| C7 | 28 | 15 | 170 | 90 |
| C5 | 20 | 1063 | 150 | 22 |
| Drying ($N_2$) 75min | | | | 22→60 |

Table 11

| **Example 10** | **mol.ratio** | **mmol** | **ml/** | |
|---|---|---|---|---|
| BOMAG-A® (20%/C7) | 1 | 35.01 | 40.00 | |
| EHA | 2 | 70.01 | 11.00 | |
| EG | 0.5 | 17.50 | 0.98 | |
| PDC | 0.5 | 17.50 | 2.52 | |
| BuCl | 1.1 | 38.28 | 4.00 | |
| EVAPORATION | | | | |
| Toluene | | | 5.0 | |
| $TiCl_4$ (110°C) | 10 | 350.1 | 38.48 | |
| Washings: | stirr. (min) | settl. (min) | ml | °C |
| Toluene | 35 | 10 | 200 | 90 |
| Toluene (+10% $TiCl_4$) | 30 | 5 | 185 | 90 |
| C7 | 16 | 4 | 170 | 90 |
| C7 | 22 | 4 | 180 | 90 |
| C5 | 25 | 5 | 210 | 22 |
| Drying ($N_2$) 15 min | | | | 22→60 |

Table 12

| **Example 11** | **mol.ratio** | **mmol** | **ml** | |
|---|---|---|---|---|
| BOMAG-A® (20%/C7) | 1 | 35.01 | 40.00 | |
| EHA | 2 | 70.01 | 11.00 | |
| EG | 0.5 | 17.50 | 0.98 | |
| PDC | 0.5 | 17.50 | 2.52 | |
| BOMAG-A (20%/C7) | 0.4 | 14.00 | 16.0 | |
| BuCl | 1.1 | 38.28 | 4.00 | |
| EVAPORATION | | | condense | |
| Toluene | | | 15 | |
| $TiCl_4$ (110°C) | 10 | 350.1 | 38.48 | |
| Cooling | | | | |
| Washings: | stirr. (min) | settl. (min) | ml | °C |
| Toluene | 30 | 15 | 120 | 90 |
| Toluene (+10% $TiCl_4$) | 31 | 6 | 135 | 90 |
| C7 | 05 | 970 | 150 | 90 |
| C7 | 25 | 8 | 205 | 90 |
| C5 | 18 | 4 | 210 | 22 |
| Drying ($N_2$) 37 min | | | | 22→60 |

Table 13

| **Example 12** | **mol.ratio** | **mmol** | **ml** | |
|---|---|---|---|---|
| BOMAG-A® (20%/C7) | 1 | 35.01 | 40.00 | |
| EHA | 2 | 70.01 | 11.00 | |
| Glycerol | 0.5 | 17.50 | 1.29 | |
| PDC | 0.5 | 17.50 | 2.52 | |
| BuCl | 1.1 | 38.29 | 4.00 | |
| EVAPORATION | | | condense | |
| Toluene | | | 15.0 | |
| $TiCl_4$ (110°C) | 10 | 350.1 | 38.48 | |
| Washings: | stirr. (min) | settl. (min) | ml | °C |
| Toluene | 28 | 12 | 120 | 107 |
| Toluene (+10% $TiCl_4$) | 20 | 21 | 140 | 90 |
| C7 | 26 | 11 | 150 | 90 |
| C7 | 24 | 22 | 165 | 90 |
| C5 | 15 | 9 | 170 | 22 |
| Drying ($N_2$) 36 min | | | | 22→60 |

Table 14

| **Example 13** | **mol.ratio** | **mmol** | **ml** | |
|---|---|---|---|---|
| BOMAG-A® (20%/C7) | 1 | 35.01 | 40.00 | |
| EHA | 2.5 | 87.52 | 13.75 | |
| EtOH | 0.1 | 3.50 | 0.20 | |
| EG | 0.05 | 1.75 | 0.10 | |
| PDC | 0.5 | 17.50 | 2.52 | |
| BOMAG-A (20%/C7) | 0.2 | 7.00 | 8.00 | |

Table 14 (continued)

| **Example 13** | **mol.ratio** | **mmol** | **ml** | |
|---|---|---|---|---|
| i-PDC | 0.05 | 1.75 | 0.36 | |
| BuCl | 1.1 | 38.28 | 4.00 | |
| EVAPORATION | | | | |
| Toluene | | | 10 | |
| $TiCl_4$ (110°C) | 10 | 350.06 | 38.48 | |
| Cooling | | | | |
| Washings: | stirr. (min) | settl. (min) | ml | °C |
| Toluene | 27 | 25 | 80 | 90 |
| Toluene (+10% $TiCl_4$) | 23 | 20 | 140 | 90 |
| C7 | 25 | 14 | 150 | 90 |
| C7 | 30 | 968 | 190 | 90 |
| C5 | 27 | 22 | 175 | 22 |
| Drying ($N_2$) 40 min | | | | 22→60 |

Table 15

| **Catalyst** | **Example 9** | **Example 10** | **Example 11** | **Example 12** | **Example 13** |
|---|---|---|---|---|---|
| Mg (wt-%) | 16.3 | 14.1 | 14.1 | 13.7 | .13.9 |
| Mg (mol/100 g catalyst) | 0.671 | 0.580 | 0.580 | 0.564 | 0.572 |
| Ti (wt-%) | 3.3 | 3.0 | 7.1 | 3.3 | 2.7 |
| Ti (mol/100 g catalyst) | 0.069 | 0.063 | 0.148 | 0.069 | 0.056 |
| BEPD (wt-%) | 2.2 | | | | |
| BEPD (mol/100 g catalyst) | 0.014 | | | | |
| EHA (wt-%) | 0.3 | 0.35 | 2.8 | 2.8 | 1.1 |
| EHA (mol/100 g catalyst) | 0.0023 | 0.0027 | 0.0215 | 0.0215 | 0.0084 |
| EtOH (wt-%) | | | | | |
| DOP (wt-%) | 27.7 | 17.6 | 18.4 | 23.2 | 21.8 |
| DOP (mol/100 g catalyst ) | 0.071 | 0.045 | 0.047 | 0.059 | 0.056 |
| DEP(wt-%) | | | | | |
| DEP (mo11100 g catalyst) | | | | | |
| Mg (mol mg/mol Ti) | 9.7 | 9.3 | 3.9 | 8.2 | 10.1 |
| Donor (mol Donor/mol Ti) | 1.0 | 0.7 | 0.3 | 0.9 | 1.0 |
| Diol | BEPD | EG | EG | Glycerol | EG+EtOH |
| Activ. (kg PP/g cat) | 26.0 | 33.8 | 13.1 | 21.2 | 20.0 |
| Activ. (kg PP/g Ti) | 788 | 1127 | 184 | 642 | 743 |
| BB (kg/$m^3$) | 330 | 380 | 410 | 310 | 380 |
| $MFR_2$ (g/10 min) | 8.8 | 6.7 | 7.5 | 7.9 | 11.4 |
| XS (wt-%) | 4.1 | 2.75 | | | |

The resulting yields in the catalyst synthesis were high.

The amounts of Ti in these catalysts are also shown in Figure 8.

No additional amount of DEP could be found in the catalyst of example 13. This example was the only one where DEP could be expected to be found because some ethanol had been added.

The % of polymer (= di-, oligo- or polyester), calculated as 100 % - % known species are correlated to the number of -OH groups in the added alcohol in Figure 9, where (1) refers to EHA, (2) to ethylene glycol and (3) to glycerol.

The molar ratios between Mg, Ti and the donor are shown in Figure 10, where Ti is presented in the first column, Mg in the second column and donor in the third column. The Figure shows that the catalysts can be divided into two groups, one group where the Mg:Ti:Donor ratio is close to 9:1:1 and a second group where less Mg is present.

The activities of the catalysts are shown in Figure 11 in kg PP/g.cat. The catalysts can be divided into two

groups depending on their activity, one group showing a high activity of above 20 kg PP/g cat and a second group showing lower activity.

The particle size distribution (PSD) of the polymer sample was measured using a Fritsch Pulverisette equipment with a sieving set consisting of 5, 4, 2, 1, 0.5, 0.18, 0.1, 0.056, 0.036 mm sieves + pan (<0:036 mm).

Figures 12a-12e show the PSD (particle size distribution) diagrams for the five polymers achieved with the catalysts in this test series. The results showed that the catalysts of examples 10, 11 and 12, showed a clearly narrower PSD compared to the catalysts of examples 9 and 13.

A more narrow particle size distribution (PSD) can be produced with ethylene glycol. The main particle size (PS) is then 1 mm.

Very good activities can be reached when using ethylene glycol in the catalyst synthesis. Activities of almost 34 kg PP/g cat were achieved.

**Examples 14 to 17**

All the chemicals used were identical to the chemicals used in previous examples. The only chemical not defined earlier but used in this study was 1,4-dichlorobutane (DCB) from Fluka (35570) that was used as a reactive halogenated hydrocarbon.

**Preparation of the catalysts**

The preparation of the catalysts was started by adding 40.0 ml (35.01 mmol) of $MgR_2$ (BOMAG-A®) to a 250 ml glass reactor. To this a mixture of both the mono alcohol and the diol, i.e. 11.0 ml (70.01 mmol) of EHA and 17.50 mmol of either BEPD or EG was added. The temperature of the reaction solution was increased to 60 °C and the reaction components were allowed to react with each other for 30 min. After this 2.52 ml (17.50 mmol) of PDC was added at 25 °C. Again, the temperature was raised to 60 °C and the components allowed to react for 30 min. The heptane was now evaporated from the reaction solution at a temperature of 105 °C, this to improve the reaction possibilities for the chlorinated hydrocarbons. After the evaporation of the heptane 45.67 mmol (5.0 ml) of either BuCl or DCB was added. The molar ratio between Mg and the chlorination agent was thus about 1:1.3 in both cases. After a 30 min reaction time 20.0 ml (188 mmol) of toluene was added. This Mg complex solution was then added dropwise to 38.48 ml (350.1 mmol) of $TiCl_4$ at 110°C. The components were allowed to react with each other for 10 min after which the solution was cooled down to 105 °C and 150 ml of toluene was added. After this the formed precipitate was allowed to settle. The settling time and the precipitate volume were recorded. When the settling step was complete the clear solution was siphoned off and the precipitate washed first once with 150 ml of toluene at 90 °C for 30 min, then twice with 150 ml of heptane at 90 °C for 30 min and last with 150 ml of pentane at room temperature for 20 min. Last, the catalyst was dried under a stream of nitrogen. The experimental setup, i.e. when BEPD or EG or when ButCl or DCB have been used in this test series, are listed in Table 16.

Table 16

| The experimental setup of examples 14 to 17 | | |
|---|---|---|
| **Example** | **Diol used** | **Chlorinated hydrocarbon used** |
| 14 | BEPD | DCB |
| 15 | EG | DCB |
| 16 | BEPD | BuCl |
| 17 | EG | BuCl |

The yield of the catalyst mass from the catalyst synthesis was calculated on the basis of how much Mg was fed into the synthesis in the form of $MgR_2$ (0.8507 g) and by comparing this amount with the amount of Mg found in the resulting catalyst. The results are listed in Table 17. In Tables 18, 19 and 20 are listed the results of the catalyst analyzes: Mg, Ti and DOP %, molar ratios Mg:Ti:DOP and calculated and measured C1 contents, respectively.

Table 17

| The yield per cent of the catalysts of examples 14 to 17 | | |
|---|---|---|
| **Example** | **Yield of catalyst (g)** | **Calculated yield[1]** |
| 14 | 6.0 | 91 |
| 15 | 3.4 | 69 |
| 16 | 5.7 | 99 |
| 17 | 6.8 | 98 |

[1]) Calculations based on: Yield % = (Catalyst yield (g) * Mg %)/0.8507 (g)

Table 18

| The Mg, Ti and DOP in the catalysts of examples 14 to 17 | | | | |
|---|---|---|---|---|
| Example | 14 | 15 | 16 | 17 |
| Mg (wt-%) | 12.9 | 17.3 | 14.9 | 12.2 |
| Mg (mol/100g catalyst) | 0.53 | 0.71 | 0.61 | 0.50 |
| Ti (wt-%) | 3.6 | 3.7 | 2.2 | 4.1 |
| Ti (mol/100 g catalyst) | 0.08 | 0.08 | 0.05 | 0.09 |
| DOP (wt-%) | 30.9 | 22.4 | 27.9 | 29.8 |
| DOP (mol/100 g catalyst) | 0.08 | 0.06 | 0.07 | 0.08 |

Table 19

| The molar ratios between Mg:Ti:DOP in the catalysts of examples 14 to 17 | | | | |
|---|---|---|---|---|
| **Examples** | **14** | **15** | **16** | **17** |
| Mg | 7.1 | 9.2 | 13.4 | 5.9 |
| Ti | 1 | 1 | 1 | 1 |
| DOP | 1.05 | 0.74 | 1.56 | 0.89 |

Table 20

| The calculated amount of Cl compared to the measured amounts of Cl in examples 14 to 17 | | | | |
|---|---|---|---|---|
| **Example** | **14** | **15** | **16** | **17** |
| Cl (wt-%), calculated | 37.7 | 50.5 | 43.5 | 35.6 |
| Cl (wt-%), measured | 47.1 | 50.5 | 52.5 | 48.8 |

The polymerization results are listed in Table 21 together with figures about the MFR and BD of the polymers.

Table 21

| Test polymerization results from bulk test polymerization of examples 14 to 17 | | | | |
|---|---|---|---|---|
| **Example** | **14** | **15** | **16** | **17** |
| Activity (kg PP/g cat.) | 24.1 | 28.0 | 21.8 | 23.0 |
| Activity (kg PP/g Ti) | 669 | 758 | 989 | 562 |
| MFR 2.16 kg (g/ 10 min) | 6.3 | 8.3 | 8.4 | 7.4 |
| BD (kg/$m^3$) | 290 | 310 | 300 | 410 |

The polymerization results showed that if the BEPD diol is exchanged to EG, this has a positive effect on the activity of the catalyst. In the case BuCl was used as chlorinated hydrocarbon there was an activity increase from 21.8 to 23.0 kg PP/g cat., and if the DCB had been used as the chlorinated hydrocarbon there was an activity increase from 21.8 to 28.0 kg PP/g cat, thus showing a 28% activity increase in the best case.

The polymerization results also showed that when using the DCB as chlorinated hydrocarbon a higher activity was achieved compared to when using BuCl. This was the case both when using BEPD and when using EG as diol: In the former case the activity increased from 21.8 to 24.1 kg PP/g cat, and in the later case the activity increased from 23.0 to 28.0 kg PP/g cat, i.e. a 22 % increase in activity.

In Table 22 the Mg/Ti molar ratio in the catalysts is compared to the activities of the catalysts. According to the results there is a steady growth in activity the higher the Mg/Ti molar ratio. Here an increase in activity from 23.0 kg PP/g cat for the ratio of 5.9 to 28.0 kg PP/g cat for the Mg/Ti ratio of 9.2 is seen.

Table 22

| The molar ratios between Mg:Ti in the catalysts and their activities | | | | |
|---|---|---|---|---|
| **Example** | **14** | **15** | **16** | **17** |
| Mg/Ti | 7.1 | 9.2 | 13.4 | 5.9 |
| Activity (kg PP/g cat.) | 24.1 | 28.0 | 21.8 | 23.0 |
| Activity (kg PP/g Ti) . | 669 | 758 | 989 | 562 |

In Table 23 the DOP/Ti molar ratio is listed together with the activity values for the catalysts. The results showed that the lower the DOP/Ti ratio the higher the activity.

. In Table 23 an. increase in activity from 21.8 kg PP/g cat to 28.0 kg PP/g cat is seen when the molar ratio of DOP/Ti decreases from 1.6 to 0.7.

Table 23

| Correlation between the DOP/Ti ratio and the activity of the catalysts | | |
|---|---|---|
| **Example** | **DOP/Ti (mol/mol)** | **Activity (kg PP/g cat)** |
| 14 | 0.7 | 24.1 |
| 15 | 0.9 | 28.0 |
| 16 | 1.0 | 21.8 |
| 17 | 1.6 | 23.0 |

In Table 24 the particle size fractions in the test polymers are listed.

Table 24

| The PS fractions in the test polymers of examples 14 to 17 as % of polymer on sieve | | | | |
|---|---|---|---|---|
| **Example Sieve size/mm** | **14** | **15** | **16** | **17** |
| 5.0 | 9.5 | 5.7 | 1.3 | 2.3 |
| 4.0 | 2.1 | 1.7 | 0.2 | 3.5 |
| 2.0 | 4.6 | 9.3 | 1.8 | 26.0 |
| 1.0 | 4.6 | 16.4 | 2.3 | 27.3 |
| 0.5 | 6.8 | 16.2 | 11.0 | 16.2 |
| 0.18 | 45.8 | 25.2 | 76.4 | 18.6 |
| 0.10 | 19.0 | 19.1 | 6.2 | 5.0 |
| 0.056 | 7.0 | 6.4 | 0.8 | 1.0 |
| 0.036 | 0.6 | 0.2 | 0.1 | 0.1 |
| <0.036 | 0.0 | 0.0 | 0.0 | 0.0 |

The results showed a drastic difference in the PSD depending on which diol had been used. If BEPD had been used the main PS fraction was on the 0.18 Trim sieve, if EG had been used the main PS fraction was on the I to 0.18 mm sieve. This effect was even more pronounced when BuCl had been used as chlorination agent compared to DCB. The results also showed that if BEPD had been used, the PSD was very sharp, up to 75% of the particles could be found on one sieve, the 0.18 mm sieve. Again if EG had been used the PSD was much broader and only about 25% of the material could be found on the main sieve, i.e. the l.mm sieve. This can clearly be seen in Table 25 where the per cent material representing the biggest fractions in the polymer PSD are listed (i.e. the fractions on the 0.18 mm and the 1 mm sieves).

Table 25

| The per cent of the polymer material in the two main fractions of the PSD | | |
|---|---|---|
| **Example** | **% at 0.18 mm sieve** | **% at 1 mm sieve** |
| 14 | 45.8 | 4.6 |
| 15 | 25.2 | 16.4 |
| 16 | 76.4 | 2.3 |
| 17 | 18.6 | 27.3 |

For comparison a catalyst was prepared in the absence of diol. When this kind of catalyst is used in polymerization the polymer particles tend to form agglomerates giving a broad PSD of the resulting polymer material. This is shown in a polymer PSD that has been produced with said catalyst. When replacing a part of the monoalcohol (EHA) used in this recipe with a diol a much narrower PSD can be achieved. The recipe is presented in Table 26 and the results of the sieve operation is presented in Table 27.

Table 26

| **Comparative example** | **mole ratio** | **mmol** | **ml** | |
|---|---|---|---|---|
| BOMAG-A® (20%/C7) | 1 | 26.55 | 30.0 | |
| EHA | 2 | 53.10 | 8.3 | |
| PDC | 1 | 26.55 | 3.8 | |
| $TiCl_4$ (95°C) | 10 | 265.5 | 29.2 | |
| Toluene | | | 80+60 | |
| Washings: | Time (min) | | ml | °C |
| Toluene | 50 | | 148 | 90 |
| Toluene | 15 | | 56 | 22→85 |
| C7 | 32 | | 68 | 22→85 |
| C7 | 32 | | 50 | <35 |
| C5 | 15 | | 60 | 22 |
| Drying ($N_2$) 42 min | | | | 22→55 |

Table 27

| **Sieve size/ mm** | **wt-%** |
|---|---|
| 5.0 | 11 |
| 4.0 | 3 |
| 2.0 | 9 |
| 1.0 | 14 |
| 0.5 | 22 |
| 0.18 | 30 |
| 0.10 | 8 |
| 0.056 | 2 |
| 0.036 | 0 |
| <0.036 | 0 |

The bulk density values (BD) for the polymers listed in Table 21 showed that there was a strong correlation between the bulk density and the did used in the synthesis. If EG had been used the BD was higher. This shows up as a BD increase from 290 to 310 when going from example 14 to example 17, i.e. from BEPD to EG and as a BD increase from 300 to 410 when going from example 16 to example 17, i.e. from BEPD to EG.

**Conclusions**

1. (1,4)-butyl-dichloride gives up to 20% higher activity to the catalyst compared to BuCl
2. EG gives 30% higher catalyst activity compared to BEPD
3. EG gives a coarse and a fine catalyst precipitate fraction, BEPD gives only a fine
4. EG gives faster settling time for the catalyst precipitate, BEPD gives slower settling time
5. EG gives smaller catalyst precipitate volume than BEPD
6. EG gives main PS of PP at 1 mm, BEPD at 0.18 mm
7. BEPD gives very narrow PSD of PP at 0.18 mm, EG gives broad at 1 mm
8. EG gives BD of 400, BEPD gives BD of 300
9. Optimum Mg/Ti is about 9
10. Optimum DOP/Ti is between 0.7 and 1.3

**Examples 18 and 19**

All the chemicals used were identical to the chemicals used in previous examples, except for the magnesium dichloride $MgCl_2$.

**Preparation of the catalysts**

The preparation of the catalysts was started by adding 1,2 g (12,6 mmol) of $MgCl_2$, 2,1 g (13,1 mmol) BEPD and 8,2 ml (52,5 mmol) EHA to a glass reactor equipped with a magnetic stirrer. The mixture was heated up to 145 °C and mixed until a clear solution was obtained. The solution was cooled down and 2 ml of toluene was added.

Half of the solution was taken into a 50 ml glass reactor equipped with a stirrer. 18.0 ml (15.8 mmol) in example 18 and 16.0 ml (14 mmol) in example 19 of $MgR_2$ (BOMAG-A®) was added while the temperature was kept between 5 to 10 °C. The temperature of the reaction solution was increased to 60 °C and 1.0 ml (7.0 mmol) of PDC was added. After the reaction was completed, 1.5 ml (14.3 mmol) BuCl was added. After 5 min the temperature was rised to 95-97 °C and about half of the liquid was evaporated with nitrogen stream. After evaporation 4.0 ml of toluene was added and the solution was then cooled down to room temperature.

This Mg complex solution was then added dropwise to 15.0 ml (136 mmol) of $TiCl_4$ at 110 °C. The components were allowed to react with each other for 15 min after which the solution was cooled down to 90 °C and 20 ml of toluene was added. After one hour, the formed precipitate was allowed to settle. When the settling step was complete the clear solution was siphoned off and the precipitate washed first once with toluene at 90 °C, then twice with heptane at 90 °C. Last, the catalyst was dried under a stream of nitrogen. The results are summarized in Table 28.

Table 28

| Catalyst | Example 18 | Example 19 |
|---|---|---|
| Mg (wt-%) | 12.4 | 14.3 |
| Ti (wt-%) | 5.4 | 2.3 |
| DOP (wt-%) | 24.1 | 29.5 |
| Activ. (kg PP/g cat) | 23.4 | 16.4 |
| BD ($kg/m^3$) | 430 | 420 |
| $MFR_2$ (g/ 10 min) | 5.6 | 5.9 |
| XS (wt-%) | 2.6 | 3.8 |

**Examples 20 and 21**

All the chemicals, used were identical to the.chemicals used in previous examples, expect the 2,2-dimethyl-1,3-propanediol was used instead of BEPD.

**Preparation of the catalysts**

The preparation of the catalysts was, started by adding 0,5 g (4,8 mmol) of 2,2-dimethyl-1,3-propanediol and

3,0 ml (19,1 mmol) in example 20 and 1,8 ml (11,5 mmol) in example 21 of 2-ethyl hexanol to a glass reactor equipped with a magnetic stirrer. The mixture was heated up to 60 °C and 11,0 ml (9,6 mmol) of BOMAG® was added. Then 1.4 ml (9,7 mmol) of PDC was added. After the reaction was completed, 1.2 ml (11.5 mmol) BuCl was added. About half of the liquid was evaporated with nitrogen stream.

This Mg complex solution was then added dropwise to 10.6 ml (96,5 mmol) of $TiCl_4$ at 110 °C. The components were allowed to react with each other for 10 min after which the solution was cooled down to 90 °C and 40,7 ml of toluene was added. After 30 min, the formed precipitate was allowed to settle. When the settling step was complete, the clear solution was siphoned off and the precipitate washed first once with toluene at 90 °C, then twice with heptane at 90 °C and once with pentane at room temperature. Last, the catalyst was dried under a stream of nitrogen and polymerized according to the above described process. The results are summarized in Table 29.

Table 29

| Catalyst | Example 20 | Example 21 |
|---|---|---|
| Mg (wt-%) | 9,2 | 10,3 |
| Ti (wt-%) | 5,7 | 7,8 |
| DOP (wt %) | 18,5 | 16,5 |
| Activ. (kg PP/g cat) | 2,3 | 0,7 |
| BD ($kg/m^3$) | 310 | |
| $MFR_2$ (g/10 min) | 11,3 | |

**Examples 22 and 23**

All the chemicals used were identical to the chemicals used in previous examples.

**Preparation of the catalysts**

The preparation of the catalyst in example 22 was started by adding 9,0 ml (57,4 mmol) of 2-ethyl hexanol to a glass reactor equipped with a magnetic stirrer. 32,0 ml (28,0 mmol) of BOMAG® was added while keeping the temperature under 10 °C. The temperature was rised to 60 °C and 2,0 ml (13,8 mmol) of PDC was added. After the reaction was completed, about half of the liquid was evaporated with nitrogen stream and 8 ml of toluene was added.

The preparation of the catalyst in example 23 was started by adding 4,5 g (28,3 mmol) of BEPD to a glass reactor equipped with a magnetic stirrer. 32,0 ml (28,0 mmol) of BOMAG® was added while keeping the temperature under 10 °C. The temperature was rised to 60 °C and 4,0 ml (28,0 mmol) of PDC was added. After the reaction was completed, about half of the liquid was evaporated with nitrogen stream and the product was washed with toluene and dried.

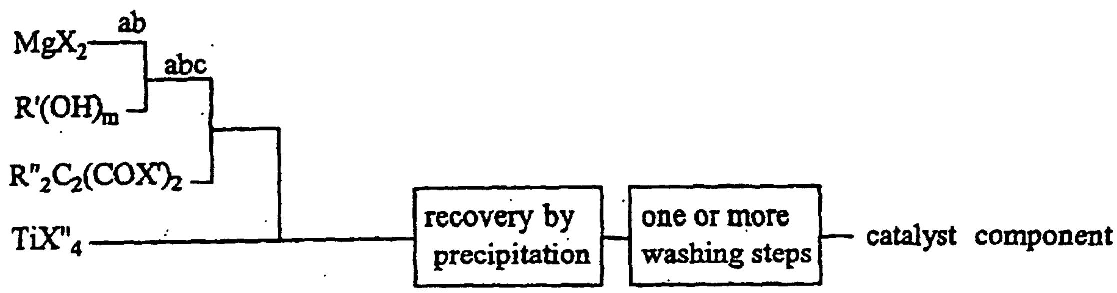


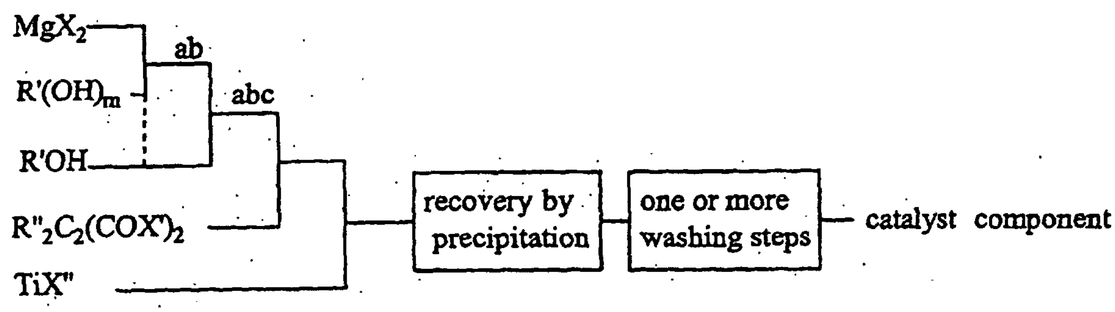


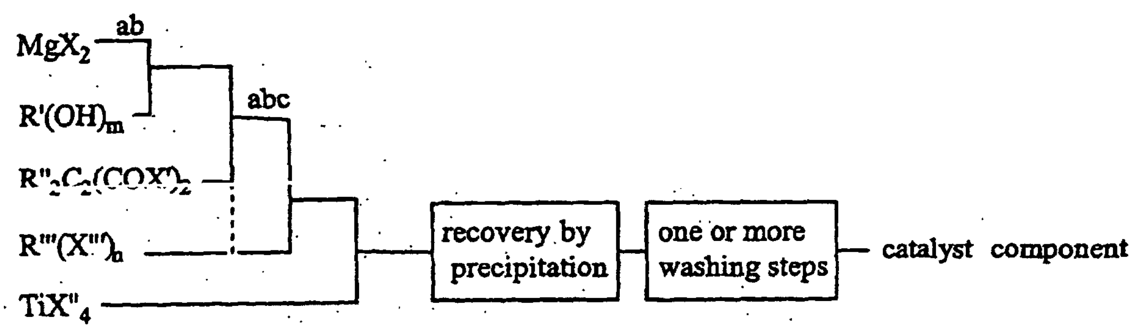


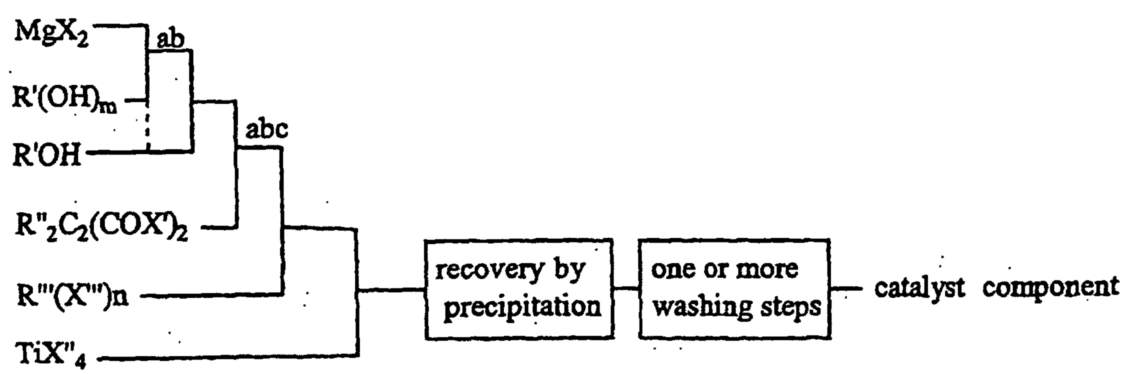


Appendix 1. Four embodiments starting from $MgX_2$. Four further embodiments are obtained when $TiX_4$" is reacted with ab in stead of abc and the product is finally reacted with $R''_2C_2(COX')_2$ and optionally $R'''(X''')_n$.

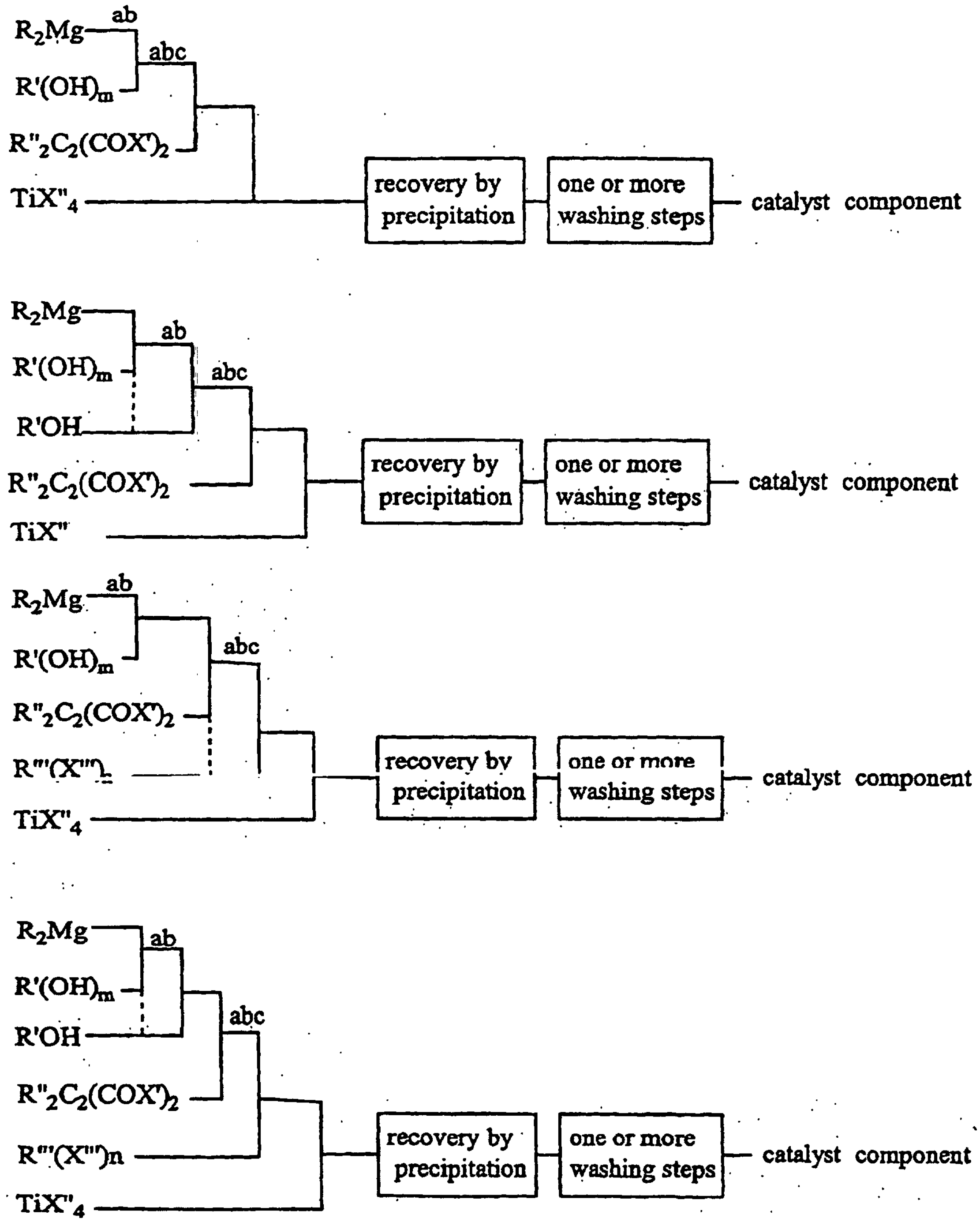


Appendix 2. Four embodiments starting from $R_2Mg$. Four further embodiments are obtained when $TiX_4$" is reacted with ab in stead of abc and the product is finally reacted with $R''_2C_2(COX')_2$ and optionally $R'''(X''')_n$.

**Claims**

1. A process for the preparation of an olefin polymerization catalyst component comprising a magnesium dihalide, a titanium tetrahalide, and a dicarboxylic acid di-, oligo- and/or polyester as internal electron donor ED, **characterized by** the steps of:

   (i) reacting in solution at least one magnesium compound (a), selected from the group consisting of a dialkyl magnesium $R_2Mg$, an alkyl magnesium alkoxide RMgOR, wherein each R is a similar or different $C_1$-$C_{20}$ alkyl, and a magnesiumdihalide $MgX_2$, wherein X is a halogen, with at least one alcohol (b) selected from the group consisting of at least one polyhydric alcohol $R'(OH)_m$, and a mixture of at least one monohydric alcohol R'OH and at least one polyhydric alcohol $R'(OH)_m$, wherein each R' is the same or different 1-valent or, respectively, m-valent $C_1$-$C_{20}$ hydrocarbyl group and m is an integer selected from 2, 3, 4, 5 and 6, to give a first intermediate (ab),

   (ii) reacting in solution said first intermediate (ab) with at least one dicarboxylic acid dihalide (c) which forms essentially all of said dicarboxylic acid di-, oligo- and/or polyester and has the formula (1):

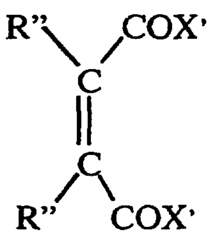

(1)

   wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen, to give a second intermediate (abc), and

   (iii) reacting said second intermediate (abc) with at least one titanium tetrahalide $TiX''_4$ (d) wherein X" is a halogen,

   (iv) recovering by precipitation said catalyst component in crude form or a precursor of said catalyst component, and

   (v) optionally washing said crude catalyst component or said precursor, to give said catalyst component.

2. A process according to claim 1, **characterized in that** at least one, preferably all of steps (i) to (iii), are performed in solution, by using one or several hydrocarbon solvents and optionally applying stirring and/or heat.

3. A process according to claim 1 or 2, **characterized in that** in step (iv), said catalyst component is recovered by precipitation from said hydrocarbon solution.

4. A process according to claim 1, 2 or 3, **characterized in that** in said polyhydric alcohol $R'(OH)_m$ of step (i), R' is a di-, tri- or tetravalent $C_2$-$C_{16}$ alkyl group and m is an integer selected from 2, 3 and 4, preferably that said polyhydric alcohol is selected from the group consisting of ethylene glycol, 2-butyl-2-ethyl-1,3-propanediol and glycerol.

5. A process according to any preceding claim, **characterized in that** in step (i), said magnesium compound (a) is reacted with said alcohol (b) which is said polyhydric alcohol $R'(OH)_m$ in a molar ratio $Mg/R'(OH)_m$ of between 1:1 and 1:0.25, preferably between about 1:0.8 and about 1:0.3.

6. A process according to any preceding claim, **characterized in that** in step (i), said magnesium compound (a) is reacted with at least two of said alcohols (b), one of which is said monohydric alcohol R'OH and the other of which is said polyhydric alcohol $R'(OH)_m$.

**7.** A process according to any preceding claim, **characterized in that** in step (i), said magnesium compound (a) is reacted with said at least one alcohol (b), under at least one of the following conditions:

- at raised temperature, preferable at about 30 °C to about 80 °C,
- for a period of about 10 min to about 90 min, preferably about 30 min,
- in the presence of a $C_5$-$C_{10}$ hydrocarbon solvent, preferably heptane.

**8.** A process according to any preceding claim, **characterized in that** said monohydric alcohol is an alcohol of the formula R'OH in which R' is a $C_2$-$C_{16}$ alkyl group, preferably a $C_4$-$C_{12}$ alkyl group, most preferably that said monohydric alcohol (b) is 2-ethyl-1-hexanol.

**9.** A process according to any preceding claim, **characterized in that** said magnesium compound (a) is in step (i) reacted with said monohydric alcohol R'OH, in a molar ratio Mg/ROH of between 1:4 and 1:1, preferably between about 1:2.5 and about 1:1.5.

**10.** A process according to any preceding claim, **characterized in that** said magnesium compound (ab) is provided by reacting, in any order, a dialkyl magnesium $R_2Mg$ and a magnesium dihalide $MgX_2$ with at least one alcohol (b), selected from the group consisting of polyhydric alcohols $R'(OH)_m$, wherein R' is an m-valent $C_1$-$C_{20}$ hydrocarbyl group and m is an integer selected from 2, 3, 4, 5 and 6.

**11.** A process according to any preceding claim, **characterized in that** said magnesium compound (a) is a dialkyl magnesium $R_2Mg$, in which each R is a similar or different $C_4$-$C_{12}$ alkyl group, preferably in which one R is a butyl group and the other R is an octyl group.

**12.** A process according to one of claims 1 to 10, **characterized in that** said magnesium compound (a) is a magnesium dihalide $MgX_2$, which is magnesium dichloride.

**13.** A process according to any preceeding claim, **characterized in that** in said dicarboxylic acid dihalide (c) of the formula (1), both R":s form together with the two unsaturated carbons of said formula (1) a $C_5$-$C_{20}$ aliphatic or $C_6$-$C_{20}$ aromatic ring, and X' is chlorine, preferably that said dicarboxylic acid dihalide (c) is phthaloyl dichloride.

**14.** A process according to any preceding claim, **charactertized** in that in step (ii), said first intermediate (ab) is reacted with said dicarboxylic acid dihalide (c) in a molar ratio $Mg_{total\ added}$/(c) between 1:1 and 1:0.1, preferably between about 1:0.6 and about 1:0.25.

**15.** A process according to any preceding claim, **characterized in that** that in step (ii), said first intermediate (ab) is reacted with said dicarboxylic acid dihalide (c), under at least one of the following conditions:

- adding said dicarboxylic acid dihalide (c) under room temperature and heating the obtained reaction mixture,
- keeping the reactants together at raised temperature, preferably at about 30 °C to about 80 °C,
- keeping the reactants together for a period of about 10 min to about 90 min, preferably about 30 min,
- reacting the reactants in the presence of a $C_5$-$C_{10}$ hydrocarbon solvent, preferably heptane.

**16.** A process according to claim 15, **characterized in that** after said first intermediate (ab) has been reacted with said dicarboxylic acid dihalide (c), said $C_5$-$C_{10}$ hydrocarbon solvent, preferably heptane, is removed by evaporation, preferably at about 100 °C to about 110 °C.

**17.** A process according to any predecing claim, **characterized by** adding in connection with at least any one of the above steps (i) to (iii), at least one reactive halogenated hydrocarbon (e) of the formula (2)

$$R'''X'''_n \qquad (2)$$

wherein R''' is an n-valent $C_1$-$C_{20}$ hydrocarbyl group, X''' is a halogen and n is an integer selected from 1, 2, 3 and 4.

**18.** A process according to claim 17, **characterized in that** in said reactive halogenated hydrocarbon (e) of the formula (2), R''' is a mono- or bivalent $C_1$-$C_{10}$ hydrocarbyl group, X''' is chlorine and n is 1 or 2, preferably that said hydrocarbyl halide (e) is a butyl chloride or (1,4)-dichlorobutane, most preferably that it is tertiary butyl chloride or (1,4)-dichlorobutane.

**19.** A process according to claim 17 or 18, **characterized in that** said reactive halogenated hydrocarbon (e) is added in an amount corresponding to a molar ratio $Mg_{total\ added}$/(e) between 1:0.2 and 1:20, preferably between about 1:1 and about 1:4.

**20.** A process according to claim 17, 18 or 19, **characterized in that** said reactive halogenated hydrocarbon (e) is added in connection with step (ii).

**21.** A process according to claim 15 and 20, **characterized in that** after said $C_5$-$C_{10}$ hydrocarbon solvent, preferably said heptane, has been removed by evaporation, said second intermediate (abc) is contacted with said reactive halogenated hydrocarbon (e), preferably for a period of about 10 min to about 90 min, preferably about 30 min.

**22.** A process according to claim 21, **characterized in that** to said second intermediate (abc) or its contact product with said reactive halogenated hydrocarbon (e), a dissolving $C_5$-$C_{10}$ hydrocarbon, preferably toluene, is added, most preferably in a molar ratio $Mg_{total\ added}$/toluene of between about 1:2 and about 1:10.

**23.** A process according to any preceding claim, **characterized in that** in step (iii), said titanium tetrahalide (d) is titanium tetrachloride.

**24.** A process according to any preceding claim, **characterized in that** in step (iii), said second intermediate (abc) is reacted with said titanium tetrahalide (d) in a molar ratio $Mg_{total\ added}$/(d) between 1:100 and 1:1, preferably between about 1:50 and about 1 :5, most preferably about 1:10.

**25.** A process according to any preceding claim, **characterized in that** step (iii) said second intermediate (abc), preferably a solution thereof, is added slowly, preferably dropwise, to said titanium tetrahalide (d), which preferably is hot (e.g. 110 °C), to form a solution of said catalyst component.

**26.** A process according to claim 22 and 25, **characterized in that** said toluene solution of said second intermediate (abc), or its contact product with said reactive halogenated hydrocarbon (e), is added dropwise to said titanium tetrahalide (d) at 110 °C.

**27.** A process according to claim 26, **characterized in that** of said second intermediate (abc), or its contact product with said reactive halogenated hydrocarbon (e), is contacted with said titanium tetrahalide (d) at 110 °C for about 5 min to about 20 min, preferably for about 10 min.

**28.** A process according to any preceding claim, **characterized in that** in step (iv), said catalyst component in crude form or a precursor of said catalyst component is recovered by cooling a solution of said catalyst component, preferably said toluene solution of said catalyst component, for the precipitation of said crude catalyst component or said precursor thereof and preferably allowing it to settle.

**29.** A process according to claim 28, **characterized in that** immediately before said precipitation, a $C_5$-$C_{10}$ hydrocarbon solvent, preferably toluene, most preferably toluene in a molar ratio $Mg_{total\ added}$/toluene of about 1:10 to about 1:100, is added to said catalyst component solution.

**30.** A process according to claim 28 or 29, **characterized in that** after said crude catalyst component or said precursor thereof has settled, the supernatant liquid is removed e.g. by decantering or siphoning.

**31.** A process according to any preceding claim, **characterized in that** in step (v), said recovered crude catalyst component or said precursor thereof is washed with toluene, preferably with hot (e.g. 90 °C) toluene.

**32.** A process according to any preceding claim, **characterized in that** in step (v), said recovered crude catalyst component or said precursor thereof is washed with heptane, preferably with hot (e.g. 90 °C) heptane.

**33.** A process according to any preceding claim, **characterized in that** in step (v), said recovered crude catalyst component or precursor thereof is washed with pentane.

**34.** A process according to any preceding claim, **characterized in that** in step (v) said recovered crude catalyst component or precursor thereof is washed until achieving the following ratio of said magnesium dihalide, said titanium tetrahalide, and said dicarboxylic acid di-, oligo- and/or polyester as internal electron donor ED (3):

$$(MgX_2)_{8\text{-}10}(TiX''_4)_1(ED)_{0.7\text{-}1.3} \qquad (3)$$

wherein $MgX_2$ is said magnesium dihalide, $TiX''_4$ is said titanium tetrahalide, X and X" is preferably Cl, and ED is said dicarboxylic acid di-, oligo- and/or polyester as internal electron donor, preferably a phthalic acid diester, whereby said recovered catalyst component is preferably washed first with toluene, more preferably hot (e.g. 90 °C) toluene, then at least twice with hot (90 °C) heptane, and finally with pentane.

**35.** A process according to any preceding claim, **characterized in that** the washed catalyst component is dried, preferably by evaporation.

**36.** An olefin polymerization catalyst component comprising a magnesium dihalide, a titanium tetrahalide, and a dicarboxylic acid di-, oligo- and/or polyester as internal electron donor ED, **characterized in that** it has been prepared according to the process of any preceding claim.

**37.** A solid olefin polymerization catalyst component comprising a magnesium dihalide, a titanium tetrahalide, and a dicarboxylic acid di-, oligo- and/or polyester as internal electron donor ED, **characterized in that** it is essentially homogenous and is obtainable by the process of claim 34 and has the following ratio of said magnesium dihalide, said titanium tetrahalide, and said dicarboxylic acid di-, oligo- and/or polyester as internal electron donor ED (3):

$$(MgX_2)_{8\text{-}10}(TiX''_4)_1(ED)_{0.7\text{-}1.3} \qquad (3)$$

wherein $MgX_2$ is said magnesium dihalide, $TiX''_4$ is said titanium tetrahalide, X and/or X" is preferably Cl and ED is said dicarboxylic acid di-, oligo- and/or polyester as the only internal electron donor, preferably a phthalic acid diester.

**38.** A catalyst component according to claim 36 or 37, **characterized in that** it contains halogen from about 10 % to about 60 % more than the amount of halogen calculated on the basis of the amounts of magnesium and titanium present, assuming that all of the magnesium is in the form of said $MgX_2$ and all of the titanium is in the form of said $TiX_4$.

**39.** A catalyst component according to claim 36, 37 or 38, **characterized in that** it shows a X-ray diffraction pattern with a lamellar thickness indicating a peak at 17° 2Θ, showing a clear position shift compared to normal amorphous $MgCl_2$ which gives a height indicating peak at 15° 2Θ.

**40.** Process for the polymerization of olefins, **characterized by** the steps of

(A) preparing in solution an olefin polymerization catalyst component comprising a magnesium dihalide, a titanium tetrahalide an a dicarboxylic acid di-, oligo- and/or polyester as internal electron donor ED, by

(i) reacting at least one magnesium compound (a), selected from the group consisting of a dialkyl magnesium $R_2Mg$, wherein each R is a similar or different $C_1$-$C_{20}$ alkyl, and a magnesium dihalide $MgX_2$, wherein X is a halogen, with at least one alcohol (b), selected from the group consisting of at least one polyhydric alcohol $R'(OH)_m$ and a mixture of at least one monohydric alcohol R'OH and at least one polyhydric alcohol $R'(OH)_m$, wherein R' is an 1-valent or, respectively, an m-valent $C_1$-$C_{20}$ hydrocarbyl group and m is an integer selected from 2, 3, 4, 5 and 6, to give a first intermediate (ab), and

(it) reacting said first intermediate (ab) with at least one dicarboxylic acid dihalide (c) which forms essentially all of the dicarboxylic acid di-, oligo- and/or polyester and has the formula (1):

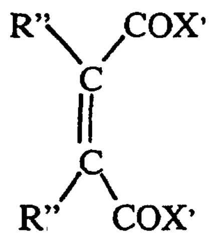

(1)

wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen, to give a second intermediate (abc), and

(iii) reacting said second intermediate (abc) with at least one titanium tetrahalide $TiX''_4$ (d) wherein X" is a halogen, or

(ii') reacting said first intermediate (ab) with at least one titanium tetrahalide $TiX''_4$ (d) wherein X" is a halogen, to give an alternative second intermediate (abd), and

(iii') reacting said alternative second intermediate (abd) with at least one dicarboxylic acid dihalide (c) which forms essentially all of the dicarboxylic acid di-, oligo- and/or polyester and has the formula (1):

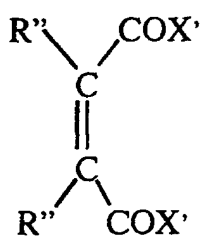

(1)

wherein each R" is a similar or different $C_1$-$C_{20}$ hydrocarbyl group or both R":s form together with the two unsaturated carbons of the formula a $C_5$-$C_{20}$ aliphatic or aromatic ring, and X' is a halogen,

(iv) recovering by precipitation said catalyst component in crude form, or a precursor of said catalyst component, and

(v) optionally washing said crude catalyst component or said precursor, to give said catalyst component,

(B) feeding to at least one polymerization reactor said catalyst component, as well as a cocatalyst, which has the formula (4)

$$R_pAl_rX_{3r-p} \qquad (4)$$

wherein R is a $C_1$-$C_{10}$ alkyl, preferably a $C_1$-$C_4$ alkyl, most preferably ethyl, X is a halogen, preferably chlorine, p is an integer from 1 to (3r-1), preferably 2 or 3, most preferably 3, and r is 1 or 2, preferably 1, the molar ratio between said catalyst component and said cocatalyst, expressed as Al/Ti, preferably being 10-2000, more preferably 50-1000, most preferably 200-500,
optionally an external electron donor, which preferably is a silane, more preferably a $C_1$-$C_{12}$ alkyl - $C_1$-$C_{12}$ alkoxy silane, most preferably cyclohexyl methyl dimethoxy silane,
optionally a $C_4$-$C_{10}$ hydrocarbon solvent, preferably pentane, hexane and/or heptane,

preferably a chain transfer agent, which is hydrogen, and
at least one olefin monomer, which preferably is propylene,

(C) carrying out the polymerization of said olefin monomer in said at least one polymerization reactor to give an olefin polymer (= homopolymer or copolymer) and

(D) recovering said olefin polymer.

**41.** Process according to claim 40, **characterized in that** said catalyst component is prepared by the process of claims 2 to 35.

**42.** Process for the polymerization of olefins, **characterized by** the steps of

(A) providing a solid olefin polymerization catalyst component which is essentially homogenous and is obtainable by the process of claim 34 and comprises a magnesium dihalide, a titanium tetrahalide, and a dicarboxylic acid di-, oligo- and/or polyester as internal electron donor ED in the following ratio (3):

$$(MgX_2)_{8-10}(TiX''_4)_1(ED)_{0.7-1.3} \qquad (3)$$

wherein $MgX_2$ is said magnesium dihalide, $TiX''_4$ is said titanium tetrahalide, X and/or X" is preferably Cl, and ED is said dicarboxylic acid di-, oligo- and/or polyester as internal donor, preferably a phthalic acid diester,

(B) feeding to at least one polymerization reactor said catalyst component, as well as a cocatalyst which has the formula (4)

$$R_pAl_rX_{3r-p} \qquad (4)$$

wherein R is is a $C_1$-$C_{10}$ alkyl, preferably a $C_1$-$C_4$ alkyl, most preferably ethyl, X is a halogen, preferably chlorine, p is an integer from 1 to (3r-1 ), preferably 2 or 3, most preferably 3, and r is 1 or 2, preferably 1, the molar ratio between said catalyst component and said cocatalyst, expressed as Al/Ti, preferably being 10-2000, more preferably 50-1000, most preferably 200-500,
optionally an external electron donor, which preferably is a silane, more preferably a $C_1$-$C_{12}$ alkyl - $C_1$-$C_{12}$ alkoxy silane, most preferably cyclohexyl methyl dimethoxy silane,
optionally a $C_4$-$C_{10}$ hydrocarbon solvent, preferably pentane, hexane and/or heptane,
preferably a chain transfer agent, which is hydrogen, and
at least one olefin monomer, which preferably is propylene,

(C) carrying out the polymerization of said olefin monomer in said at least one polymerization reactor to give an olefin polymer (= homopolymer or copolymer) and

(D) recovering said olefin polymer.

**Patentansprüche**

**1.** Verfahren zur Herstellung einer Katalysatorkomponente für die Olefinpolymerisation, die ein Magnesiumdihalogenid, ein Titantetrahalogenid und einen Di-, Oligo- und/oder Polyester einer Dicarbonsäure als internen Elektronendonor ED umfaßt, **gekennzeichnet durch** die Schritte:

(i) in einer Lösung wird zumindest eine Magnesiumverbindung (a), ausgewählt aus der Gruppe, die aus Dialkylmagnesium $R_2Mg$, einem Alkylmagnesiumalkoxid RMgOR, wobei R jeweils eine gleichartige oder verschiedene $C_1$-$C_{20}$-Alkylgruppe ist, und einem Magnesiumdihalogenid $MgX_2$ besteht, wobei X ein Halogenatom ist, mit mindestens einem Alkohol (b) umgesetzt, der aus der Gruppe ausgewählt ist, die aus mindestens einem mehrwertigen Alkohol $R'(OH)_m$ und einem Gemisch von mindestens einem einwertigen Alkohol R'OH und mindestens einem mehrwertigen Alkohol $R'(OH)_m$ besteht, wobei R' jeweils der gleiche oder ein anderer ein-

wertiger oder m-wertiger $C_1$-$C_{20}$-Kohlenwasserstoffrest ist und m eine ganze Zahl, ausgewählt aus 2, 3, 4, 5 und 6 ist, wo**durch** ein erstes Zwischenprodukt (ab) erhalten wird,

(ii) in einer Lösung wird dieses erste Zwischenprodukt (ab) mit mindestens einem Dicarbonsäuredihalogenid (c) umgesetzt, das im wesentlichen den gesamten Di-, Oligo- und/oder Polyester der Dicarbonsäure bildet und die Formel (1) hat:

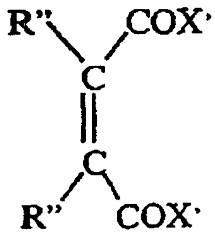

(1)

wobei R" jeweils ein gleichartiger oder verschiedener $C_1$-$C_{20}$-Kohlenwasserstoffrest ist oder beide R" zusammen mit den beiden ungesättigten Kohlenstoffatomen der Formel eine aliphatische $C_5$-$C_{20}$-Struktur oder einen aromatischen Ring bilden und X' ein Halogenatom ist, wodurch ein zweites Zwischenprodukt (abc) erhalten wird, und

(iii) dieses zweite Zwischenprodukt (abc) wird mit mindestens einem Titantetrahalogenid $TiX''_4$ (d) umgesetzt, wobei X" ein Halogenatom ist,

(iv) die Katalysatorkomponente in unbehandelter Form oder eine Vorläuferverbindung dieser Katalysatorkomponente wird **durch** Fällen gewonnen, und

(v) die unbehandelte Katalysatorkomponente oder die Vorläuferverbindung wird gegebenenfalls gewaschen, wodurch die Katalysatorkomponente erhalten wird.

**2.** Verfahren nach Anspruch 1, **dadurch gekennzeichnet, daß** zumindest einer der, vorzugsweise alle Schritte (i) bis (iii) in Lösung durchgeführt werden, wobei ein Kohlenwasserstofflösungsmittel oder mehrere verwendet werden und gegebenenfalls gerührt wird und/oder Wärme angewendet wird.

**3.** Verfahren nach Anspruch 1 oder 2, **dadurch gekennzeichnet, daß** im Schritt (iv) die Katalysatorkomponente durch Fällen aus der Kohlenwasserstofflösung gewonnen wird.

**4.** Verfahren nach Anspruch 1, 2 oder 3, **dadurch gekennzeichnet, daß** in diesem mehrwertigem Alkohol $R'(OH)_m$ vom Schritt (i) R' eine 2-, 3- oder 4-wertige $C_2$-$C_{16}$-Alkylgruppe ist und m eine ganze Zahl, ausgewählt aus 2, 3 und 4 ist, vorzugsweise, daß der mehrwertige Alkohol aus der Gruppe ausgewählt ist, die aus Ethylenglycol, 2-Butyl-2-ethyl-1,3-propandiol und Glycerol besteht.

**5.** Verfahren nach einem der vorstehenden Ansprüche, **dadurch gekennzeichnet, daß** im Schritt (i) die Magnesiumverbindung (a) mit dem Alkohol (b), der dieser mehrwertige Alkohol $R'(OH)_m$ ist, in einem Molverhältnis von Mg/R'(OH)m von 1:1 bis 1:0,25, vorzugsweise von etwa 1:0,8 bis etwa 1:0,3, umgesetzt wird.

**6.** Verfahren nach einem der vorstehenden Ansprüche, **dadurch gekennzeichnet, daß** im Schritt (i) die Magnesiumverbindung (a) mit zumindest zwei dieser Alkohole (b) umgesetzt wird, von denen einer der einwertige Alkohol R'OH und der andere der mehrwertige Alkohol $R'(OH)_m$ ist.

**7.** Verfahren nach einem der vorstehenden Ansprüche, **dadurch gekennzeichnet, daß** im Schritt (i) die Magnesiumverbindung (a) unter zumindest einer der folgendem Bedingungen mit dem zumindest einen Alkohol (b) umgesetzt wird:

- bei einer erhöhten Temperatur, vorzugsweise bei etwa 30 bis etwa 80°C,
- während eines Zeitraum von etwa 10 Minuten bis etwa 90 Minuten, vorzugsweise etwa 30 Minuten,

- in Gegenwart eines $C_5$-$C_{10}$-Kohlenwasserstofflösungsmittels, vorzugsweise Heptan.

**8.** Verfahren nach einem der vorstehenden Ansprüche, **dadurch gekennzeichnet, daß** der einwertige Alkohol ein Alkohol der Formel R'OH ist, wobei R' eine $C_2$-$C_{16}$-Alkylgruppe, vorzugsweise eine $C_4$-$C_{12}$-Alkylgruppe ist, besonders bevorzugt, daß dieser einwertige Alkohol (b) 2-Ethyl-1-hexanol ist.

**9.** Verfahren nach einem der vorstehenden Ansprüche, **dadurch gekennzeichnet, daß** die Magnesiumverbindung (a) im Schritt in (i) mit dem einwertigen Alkohol R'OH in einem Molverhältnis von Mg/ROH von 1:4 bis 1:1, vorzugsweise von etwa 1:2,5 bis etwa 1:1,5 umgesetzt wird.

**10.** Verfahren nach einem der vorstehenden Ansprüche, **dadurch gekennzeichnet, daß** die Magnesiumverbindung (ab) bereitgestellt wird, indem ein Dialkylmagnesium $R_2Mg$ und ein Magnesiumdihalogenid $MgX_2$ in irgendeiner Reihenfolge mit mindestens einem Alkohol (b) umgesetzt werden, der aus der Gruppe ausgewählt ist, die aus mehrwertigen Alkoholen $R'(OH)_m$ besteht, wobei R' ein m-wertiger $C_1$-$C_{20}$-Kohlenwasserstoffrest ist und m eine ganze Zahl, ausgewählt aus 2, 3, 4, 5 und 6 ist.

**11.** Verfahren nach einem der vorstehenden Ansprüche, **dadurch gekennzeichnet, daß** die Magnesiumverbindung (a) ein Dialkylmagnesium $R_2Mg$ ist, wobei R jeweils eine gleichartige oder verschiedene $C_4$-$C_{12}$-Alkylgruppe ist, vorzugsweise, daß ein R eine Butylgruppe und das andere R eine Octylgruppe ist.

**12.** Verfahren nach einem der Ansprüche 1 bis 10, **dadurch gekennzeichnet, daß** die Magnesiumverbindung (a) ein Magnesiumdihalogenid $MgX_2$ ist, das Magnesiumdichlorid ist.

**13.** Verfahren nach einem der vorstehenden Ansprüche, **dadurch gekennzeichnet, daß** bei diesem Dicarbonsäuredihalogenid (c) der Formel (1) beide R'' zusammen mit den beiden ungesättigten Kohlenstoffatomen der Formel (1) eine aliphatische $C_5$-$C_{20}$-Struktur oder einen aromatischen $C_6$-$C_{20}$-Ring bilden und X' ein Chloratom ist, vorzugsweise, daß das Dicarbonsäuredihalogenid (c) Phthaloyldichlorid ist.

**14.** Verfahren nach einem der vorstehenden Ansprüche, **dadurch gekennzeichnet, daß** im Schritt (ii) das erste Zwischenprodukt (ab) mit dem Dicarbonsäuredihalogenid (c) in einem Molverhältnis von $Mg_{zugesetzt, gesamt}$/(c) von 1:1 bis 1:0,1, vorzugsweise von etwa 1:0,6 bis etwa 1:0,25 umgesetzt wird.

**15.** Verfahren nach einem der vorstehenden Ansprüche, **dadurch gekennzeichnet, daß** im Schritt (ii) das erste Zwischenprodukt (ab) unter zumindest einer der folgenden Bedingungen mit dem Dicarbonsäuredihalogenid (c) umgesetzt wird:

- das Dicarbonsäuredihalogenid (c) wird bei Raumtemperatur zugesetzt, und das erhaltene Reaktionsgemisch wird erwärmt,
- die Reaktanten werden bei einer erhöhten Temperatur, vorzugsweise bei etwa 30 bis etwa 80°C, zusammen belassen,
- die Reaktanten werden für einen Zeitraum von etwa 10 bis etwa 90 Minuten, vorzugsweise etwa 30 Minuten, zusammen belassen,
- die Reaktanten werden in Gegenwart eines $C_5$-$C_{10}$-Kohlenwasserstofflösungsmittels, vorzugsweise Heptan, umgesetzt.

**16.** Verfahren nach Anspruch 15, **dadurch gekennzeichnet, daß** nach der Umsetzung des ersten Zwischenproduktes (ab) mit dem Dicarbonsäuredihalogenid (c) das $C_5$-$C_{10}$-Kohlenwasserstofflösungsmittel, vorzugsweise Heptan, durch Verdampfen, vorzugsweise bei etwa 100 bis etwa 110°C, entfernt wird.

**17.** Verfahren nach einem der vorstehenden Ansprüche, **dadurch gekennzeichnet, daß** in Verbindung mit zumindest irgendeinem der vorstehend genannten Schritte (i) bis (iii) zumindest ein reaktiver halogenierter Kohlenwasserstoff (e) der Formel (2) zugesetzt wird

$$R'''X'''_n \quad (2)$$

wobei R''' ein n-wertiger $C_1$-$C_{20}$-Kohlenwasserstoffrest ist, X''' ein Halogenatom ist und n eine ganze Zahl, ausgewählt aus 1, 2, 3 und 4 ist.

**18.** Verfahren nach Anspruch 17, **dadurch gekennzeichnet, daß** bei diesem reaktiven halogenierten Kohlenwasserstoff (e) der Formel (2) R''' ein ein- oder zweiwertiger $C_1$-$C_{10}$-Kohlenwasserstoffrest ist, X''' Chlor ist und n 1 oder 2 ist, vorzugsweise daß das Kohlenwasserstoffhalogenid (e) Butylchlorid oder (1,4)-Dichlorbutan ist, besonders bevorzugt, daß es ein tertiäres Butylchlorid oder (1,4)-Dichlorbutan ist.

**19.** Verfahren nach Anspruch 17 oder 18, **dadurch gekennzeichnet, daß** der reaktive halogenierte Kohlenwasserstoff (e) in einer Menge zugesetzt wird, die einem Molverhältnis von $Mg_{zugesetzt, gesamt}$/(e) von 1:0,2 bis 1:20, vorzugsweise von etwa 1:1 bis etwa 1:4, entspricht.

**20.** Verfahren nach den Ansprüchen 17, 18 oder 19, **dadurch gekennzeichnet, daß** der reaktive halogenierte Kohlenwasserstoff (e) in Verbindung mit dem Schritt (ii) zugesetzt wird.

**21.** Verfahren nach Anspruch 15 und 20, **dadurch gekennzeichnet, daß** nach dem Entfernen des $C_5$-$C_{10}$-Kohlenwasserstofflösungsmittels, vorzugsweise Heptan, durch Verdampfen das zweite Zwischenprodukt (abc) vorzugsweise während eines Zeitraums von etwa 10 bis etwa 90 Minuten, vorzugsweise für etwa 30 Minuten, mit dem reaktiven halogenierten Kohlenwasserstoff (e) in Kontakt gebracht wird.

**22.** Verfahren nach Anspruch 21, **dadurch gekennzeichnet, daß** diesem zweiten Zwischenprodukt (abc) oder dessen Kontaktprodukt mit dem reaktiven halogenierten Kohlenwasserstoff (e) ein lösender $C_5$-$C_{10}$-Kohlenwasserstoff, vorzugsweise Toluol, besonders bevorzugt in einem Molverhältnis von $Mg_{zugesetzt, gesamt}$/Toluol von etwa 1:2 bis etwa 1:10, zugesetzt wird.

**23.** Verfahren nach einem der vorstehenden Ansprüche, **dadurch gekennzeichnet, daß** im Schritt (iii) das Titantetrahalogenid (d) Titantetrachlorid ist.

**24.** Verfahren nach einem der vorstehenden Ansprüche, **dadurch gekennzeichnet, daß** im Schritt (iii) das zweite Zwischenprodukt (abc) mit dem Titantetrahalogenid (d) in einem Molverhältnis von $Mg_{zugesetzt, gesamt}$/(d) von 1: 100 bis 1:1, vorzugsweise von etwa 1:50 bis etwa 1:5, besonders bevorzugt von etwa 1:10, umgesetzt wird.

**25.** Verfahren nach einem der vorstehenden Ansprüche, **dadurch gekennzeichnet, daß** im Schritt (iii) das zweite Zwischenprodukt (abc), vorzugsweise eine Lösung davon, langsam, vorzugsweise tropfenweise, dem Titantetrahalogenid (d) zugesetzt wird, das vorzugsweise heiß ist (z.B. 110°C), um eine Lösung der Katalysatorkomponente zu erzeugen.

**26.** Verfahren nach Anspruch 22 und 25, **dadurch gekennzeichnet, daß** die Toluollösung des zweiten Zwischenproduktes (abc) oder dessen Kontaktproduktes mit dem reaktiven halogenierten Kohlenwasserstoff (e) dem Titantetrahalogenid (d) bei 110°C tropfenweise zugesetzt wird.

**27.** Verfahren nach Anspruch 26, **dadurch gekennzeichnet, daß** das zweite Zwischenprodukt (abc) oder dessen Kontaktprodukt mit dem reaktiven halogenierten Kohlenwasserstoff (e) etwa 5 Minuten bis etwa 20 Minuten, vorzugsweise etwa 10 Minuten, bei 110°C mit dem Titantetrahalogenid (d) in Kontakt gebracht wird.

**28.** Verfahren nach einem der vorstehenden Ansprüche, **dadurch gekennzeichnet, daß** im Schritt (iv) die Katalysatorkomponente in unbehandelter Form oder eine Vorläuferverbindung der Katalysatorkomponente gewonnen wird, indem eine Lösung der Katalysatorkomponente, vorzugsweise die Toluollösung der Katalysatorkomponente, zum Fällen der unbehandelten Katalysatorkomponente oder deren Vorläuferverbindung und vorzugsweise, um deren Absetzen zu ermöglichen, abgekühlt wird.

**29.** Verfahren nach Anspruch 28, **dadurch gekennzeichnet, daß** der Lösung der Katalysatorkomponente unmittelbar vor dem Fällen ein $C_5$-$C_{10}$-Kohlenwasserstofflösungsmittel, vorzugsweise Toluol, besonders bevorzugt Toluol in einem Molverhältnis von $Mg_{zugesetzt, gesamt}$/Toluol von etwa 1:10 bis etwa 1:100, zugesetzt wird.

**30.** Verfahren nach Anspruch 28 oder 29, **dadurch gekennzeichnet, daß**, nachdem sich die unbehandelte Katalysatorkomponente oder deren Vorläuferverbindung abgesetzt hat, die überstehende Flüssigkeit, z.B. durch Dekantieren oder Absaugen, entfernt wird.

**31.** Verfahren nach einem der vorstehenden Ansprüche, **dadurch gekennzeichnet, daß** im Schritt (v) die gewonnene unbehandelte Katalysatorkomponente oder deren Vorläuferverbindung mit Toluol, vorzugsweise mit heißem (z.B. 90°C) Toluol, gewaschen wird.

**32.** Verfahren nach einem der vorstehenden Ansprüche, **dadurch gekennzeichnet, daß** im Schritt (v) die gewonnene unbehandelte Katalysatorkomponente oder deren Vorläuferverbindung mit Heptan, vorzugsweise mit heißem (z. B. 90°C) Heptan, gewaschen wird.

**33.** Verfahren nach einem der vorstehenden Ansprüche, **dadurch gekennzeichnet, daß** im Schritt (v) die gewonnene unbehandelte Katalysatorkomponente oder deren Vorläuferverbindung mit Pentan gewaschen wird.

**34.** Verfahren nach einem der vorstehenden Ansprüche, **dadurch gekennzeichnet, daß** im Schritt (v) die gewonnene unbehandelte Katalysatorkomponente oder deren Vorläuferverbindung gewaschen wird, bis das folgende Verhältnis (3) zwischen dem Magnesiumdihalogenid, dem Titantetrahalogenid und dem Di-, Oligo- und/oder Polyester der Dicarbonsäure als internem Elektronendonor ED erhalten wird:

$$(MgX_2)_{8-10}(TiX''_4)_1(ED)_{0,7-1,3} \qquad (3)$$

wobei $MgX_2$ das Magnesiumdihalogenid ist, $TiX''_4$ das Titantetrahalogenid ist, X und X" vorzugsweise Cl sind und ED der Di-, Oligo- und/oder Polyester der Dicarbonsäure als interner Elektronendonor, vorzugsweise ein Phthalsäurediester, ist, wobei die gewonnene Katalysatorkomponente vorzugsweise zuerst mit Toluol, stärker bevorzugt heißem (z.B. 90°C) Toluol, dann zumindest zweimal mit heißem (90°C) Heptan und schließlich mit Pentan gewaschen wird.

**35.** Verfahren nach einem der vorstehenden Ansprüche, **dadurch gekennzeichnet, daß** die gewaschene Katalysatorkomponente, vorzugsweise durch Verdampfen, getrocknet wird.

**36.** Katalysatorkomponente für die Olefinpolymerisation, die ein Magnesiumdihalogenid, ein Titantetrahalogenid und einen Di-, Oligo- und/oder Polyester einer Dicarbonsäure als internen Elektronendonor ED umfaßt, **dadurch gekennzeichnet, daß** sie nach einem Verfahren nach einem der vorstehenden Ansprüche hergestellt ist.

**37.** Feste Katalysatorkomponente für die Olefinpolymerisation, die ein Magnesiumdihalogenid, ein Titantetrahalogenid und einen Di-, Oligo- und/oder Polyester einer Dicarbonsäure als internen Elektronendonor ED umfaßt, **dadurch gekennzeichnet, daß** sie im wesentlichen homogen ist und nach dem Verfahren nach Anspruch 34 erhalten werden kann und folgendes Verhältnis (3) zwischen dem Magnesiumdihalogenid, dem Titantetrahalogenid und dem Di-, Oligo- und/oder Polyester der Dicarbonsäure als internem Elektronendonor ED aufweist:

$$(MgX_2)_{8-10}(TiX''_4)_1(ED)_{0,7-1,3} \qquad (3)$$

wobei $MgX_2$ das Magnesiumdihalogenid ist, $TiX''_4$ das Titantetrahalogenid ist, X und X" vorzugsweise Cl sind und ED der Di-, Oligo- und/oder Polyester der Dicarbonsäure als interner Elektronendonor, vorzugsweise ein Phthalsäurediester, ist.

**38.** Katalysatorkomponente nach Anspruch 36 oder 37, **dadurch gekennzeichnet, daß** sie Halogen mit etwa 10 % bis etwa 60 % mehr als die Halogenmenge enthält, die auf der Basis der vorhandenen Mengen von Magnesium und Titan berechnet wird, wobei angenommen wird, daß das gesamte Magnesium in Form des $MgX_2$ vorliegt und das gesamte Titan in Form des $TiX_4$ vorliegt.

**39.** Katalysatorkomponente nach Anspruch 36, 37 oder 38, **dadurch gekennzeichnet, daß** sie ein Röntgenbeugungsdiagramm mit einer Schichtdicke zeigt, die bei 17° 2Θ einen Peak zeigt, wobei sie eine deutliche Verschiebung der Position im Vergleich mit normalem amorphem $MgCl_2$ zeigt, das einen höhebestimmenden Peak bei 15° 20Θ ergibt.

**40.** Verfahren zum Polymerisieren von Olefinen, **gekennzeichnet durch** die Schritte:

(A) in einer Lösung wird eine Katalysatorkomponente für die Olefinpolymerisation, die ein Magnesiumdihalogenid, ein Titantetrahalogenid und einen Di-, Oligo- und/oder Polyester einer Dicarbonsäure als internen Elektronendonor ED umfaßt, wie folgt hergestellt

(i) mindestens eine Magnesiumverbindung (a), ausgewählt aus der Gruppe, die aus Dialkylmagnesium $R_2Mg$, wobei R jeweils eine gleichartige oder verschiedene $C_1$-$C_{20}$-Alkylgruppe ist, und einem Magnesiumdihalogenid $MgX_2$ besteht, wobei X ein Halogen ist, wird mit mindestens einem Alkohol (b) umgesetzt, der aus der Gruppe ausgewählt ist, die aus mindestens einem mehrwertigen Alkohol R'(OH)m und einem Gemisch von mindestens einem einwertigen Alkohol R'OH und mindestens einem mehrwertigen Alkohol R'(OH)m besteht, wobei R' ein einwertiger oder m-wertiger $C_1$-$C_{20}$-Kohlenwasserstoffrest ist und m eine ganze Zahl, ausgewählt aus 2, 3, 4, 5 und 6 ist, wodurch ein erstes Zwischenprodukt (ab) erhalten wird, und

(ii) dieses erste Zwischenprodukt (ab) wird mit mindestens einem Dicarbonsäuredihalogenid (c) umgesetzt, das im wesentlichen den gesamten Di-, Oligo- und/oder Polyester der Dicarbonsäure bildet und die Formel (1) hat:

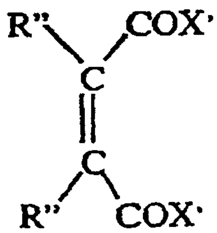

(1)

wobei R" jeweils ein gleichartiger oder verschiedener $C_1$-$C_{20}$-Kohlenwasserstoffrest ist oder beide R" zusammen mit den beiden ungesättigten Kohlenstoffatomen der Formel eine aliphatische $C_5$-$C_{20}$-Struktur oder einen aromatischen Ring bilden und X' ein Halogenatom ist, wodurch ein zweites Zwischenprodukt (abc) erhalten wird, und

(iii) dieses zweite Zwischenprodukt (abc) wird mit mindestens einem Titantetrahalogenid $TiX''_4$ (d) umgesetzt, wobei X" ein Halogenatom ist, oder

(ii') das erste Zwischenprodukt (ab) wird mit mindestens einem Titantetrahalogenid $TiX''_4$ (d) umgesetzt, wobei X" ein Halogenatom ist, wodurch ein anderes zweites Zwischenprodukt (abd) erhalten wird, und

(iii')dieses andere zweite Zwischenprodukt (abd) wird mit mindestens einem Dicarbonsäuredihalogenid (c) umgesetzt, das im wesentlichen den gesamten Di-, Oligound/oder Polyester der Dicarbonsäure bildet und die Formel (1) hat:

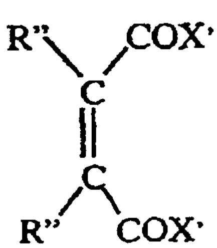

(1)

wobei R" jeweils ein gleichartiger oder verschiedener $C_1$-$C_{20}$-Kohlenwasserstoffrest ist oder beide R" zusammen mit den beiden ungesättigten Kohlenstoffatomen der Formel eine aliphatische $C_5$-$C_{20}$-Struktur oder einen aromatischen Ring bilden und X' ein Halogenatom ist,

(iv) die Katalysatorkomponente in unbehandelter Form oder eine Vorläuferverbindung dieser Katalysatorkomponente wird **durch** Fällen gewonnen, und

(v) die unbehandelte Katalysatorkomponente oder die Vorläuferverbindung wird gegebenenfalls gewaschen, wodurch die Katalysatorkomponente erhalten wird,

(B) mindestens einem Polymerisationsreaktor werden diese Katalysatorkomponente sowie ein Cokatalysator, der die Formel (4) hat

$$R_pAl_rX_{3r-p} \qquad (4)$$

wobei R eine $C_1$-$C_{10}$-Alkyl-, vorzugsweise eine $C_1$-$C_4$-Alkyl-, besonders bevorzugt eine Ethylgruppe ist, X ein Halogenatom, vorzugsweise ein Chloratom ist, p eine ganze Zahl von 1 bis (3r-1), vorzugsweise 2 oder 3, besonders bevorzugt 3 ist und r 1 oder 2, vorzugsweise 1 ist, wobei das Molverhältnis zwischen der Katalysatorkomponente und dem Cokatalysator, als Al/Ti angegeben, vorzugsweise 10 bis 2000, stärker bevorzugt 50 bis 1000, besonders bevorzugt 200 bis 500 beträgt,
gegebenenfalls ein externer Elektronendonor, der vorzugsweise ein Silan, stärker bevorzugt ein $C_1$-$C_{12}$-Alkyl-$C_1$-$C_{12}$-alkoxysilan, besonders bevorzugt Cyclohexylmethyldimethoxysilan, ist,
gegebenenfalls ein $C_4$-$C_{10}$-Kohlenwasserstofflösungsmittel, vorzugsweise Pentan, Hexan und/oder Heptan,
vorzugsweise ein Kettenübertragungsmittel, das Wasserstoff ist, und
zumindest ein Olefinmonomer, das vorzugsweise Propylen ist,
zugeführt,

(C) die Polymerisation des Olefinmonomers wird in dem zumindest einen Polymerisationsreaktor durchgeführt, wodurch ein Olefinpolymer (= Homopolymer oder Copolymer) erhalten wird, und

(D) das Olefinpolymer wird gewonnen.

**41.** Verfahren nach Anspruch 40, **dadurch gekennzeichnet, daß** die Katalysatorkomponente nach dem Verfahren der Ansprüche 2 bis 35 hergestellt ist.

**42.** Verfahren zum Polymerisieren von Olefinen, **gekennzeichnet durch** die Schritte

(A) eine feste Katalysatorkomponente für die Olefinpolymerisation wird bereitgestellt, die im wesentlichen homogen ist und nach dem Verfahren nach Anspruch 34 erhalten werden kann und ein Magnesiumdihalogenid, ein Titantetrahalogenid und einen Di-, Oligo- und/oder Polyester einer Dicarbonsäure als internen Elektronendonor ED in folgendem Verhältnis (3) umfaßt:

$$(MgX_2)_{8-10}(TiX''_4)_1(ED)_{0,7-1,3} \qquad (3)$$

wobei $MgX_2$ das Magnesiumdihalogenid ist, $TiX''_4$ das Titantetrahalogenid ist, X und/oder X'' vorzugsweise Cl sind und ED der Di-, Oligo- und/oder Polyester der Dicarbonsäure als interner Elektronendonor, vorzugsweise ein Phthalsäurediester, ist,

(B) mindestens einem Polymerisationsreaktor werden diese Katalysatorkomponente sowie auch ein Cokatalysator, der die Formel (4) hat

$$R_pAl_rX_{3r-p} \qquad (4)$$

wobei R eine $C_1$-$C_{10}$-Alkyl-, vorzugsweise eine $C_1$-$C_4$-A1-kyl-, besonders bevorzugt eine Ethylgruppe ist, X ein Halogenatom, vorzugsweise ein Chloratom ist, p eine ganze Zahl von 1 bis (3r-1), vorzugsweise 2 oder 3, besonders bevorzugt 3 ist und r 1 oder 2, vorzugsweise 1 ist, wobei das Molverhältnis zwischen der Katalysatorkomponente und dem Cokatalysator, als Al/Ti angegeben, vorzugsweise 10 bis 2000, stärker bevorzugt 50 bis 1000, besonders bevorzugt 200 bis 500 beträgt,

gegebenenfalls ein externer Elektronendonor, der vorzugsweise ein Silan, stärker bevorzugt ein $C_1$-$C_{12}$-Alkyl-$C_1$-$C_{12}$-alkoxysilan, besonders bevorzugt Cyclohexylmethyldimethoxysilan, ist,
gegebenenfalls ein $C_4$-$C_{10}$-Kohlenwasserstofflösungsmittel, vorzugsweise Pentan, Hexan und/oder Heptan,
vorzugsweise ein Kettenübertragungsmittel, das Wasserstoff ist, und
zumindest ein Olefinmonomer, das vorzugsweise Propylen ist,
zugeführt,

(C) die Polymerisation des Olefinmonomers wird in dem zumindest einem Polymerisationsreaktor durchgeführt, wodurch ein Olefinpolymer (= Homopolymer oder Copolymer) erhalten wird, und

(D) das Olefinpolymer wird gewonnen.

**Revendications**

1. Procédé de préparation d'un composant catalyseur de polymérisation d'oléfines comprenant un dihalogénure de magnésium, un tétrahalogénure dé titane et un di-, un oligo- et/ou un polyester d'acide dicarboxylique, en tant que donneur d'électrons interne ED, **caractérisé par** les étapes consistant

(i) à faire réagir en solution au moins un composé du magnésium (a), choisi dans l'ensemble consistant en un dialkylmagnésium $R_2Mg$, un alkylate d'alkylmagnésium RMgOR, où chaque radical R est un groupe alkyle en $C_1$ à $C_{20}$, identique ou différent, et un dihalogénure de magnésium $MgX_2$ dans lequel X est un halogène, avec au moins un alcool (b) choisi dans l'ensemble consistant en au moins un polyalcool $R'(OH)_m$ et un mélange d'au moins un monoalcool R'OH et d'au moins un polyalcool $R'(OH)_m$, où chaque radical R' est un groupe hydrocarboné en $C_1$ à $C_{20}$, identique ou différent, monovalent ou m-valent, et m est un entier choisi parmi les nombres 2, 3, 4, 5 et 6, pour donner un premier intermédiaire (ab,
(ii) à faire réagir en solution ledit premier intermédiaire (ab) avec au moins un dihalogénure d'acide dicarboxylique (c), qui va former la presque totalité dudit di-, oligo- et/ou polyester d'acide dicarboxylique, et qui a la Formule (1) :

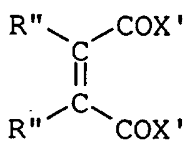

(1)

dans laquelle chaque radical R" est un groupe hydrocarboné en $C_1$ à $C_{20}$, identique ou différent, ou encore les deux radicaux R" forment ensemble avec les deux atomes de carbone insaturés de la formule un noyau aliphatique ou aromatique en $C_5$ à $C_{20}$, et X' est un halogène, pour donner un deuxième intermédiaire (abc), et
(iii) à faire réagir ledit deuxième intermédiaire (abc) avec au moins un tétrahalogénure de titane $TiX''_4$ (d), dans lequel x" est un halogène,
(iv) à récupérer par précipitation ledit composant catalyseur sous forme brute, ou un précurseur dudit composant catalyseur, et
(v) en option, à laver ledit composant catalyseur brut ou ledit précurseur, pour donner ledit composant catalyseur.

2. Procédé selon la revendication 1, **caractérisé en ce qu'**au moins l'une et de préférence la totalité des étapes (i) à (iii) sont mises en oeuvre en solution, par utilisation d'un ou plusieurs solvants hydrocarbonés, en appliquant éventuellement une agitation et/ou de la chaleur.

3. Procédé selon la revendication 1 ou 2, **caractérisé en ce que**, dans l'étape (iv), ledit composant catalyseur est récupéré par précipitation de ladite solution hydrocarbonée.

4. Procédé selon la revendication 1, 2 ou 3, **caractérisé en ce que**, dans ledit polyalcool $R'(OH)_m$ de l'étape (i), R' est un groupe alkyle en $C_2$ à $C_{16}$ di-, tri-ou tétravalent, et m est un entier choisi parmi les nombres 2, 3 et 4, de préférence **en ce que** ledit polyalcool est choisi dans l'ensemble consistant en l'éthylèneglycol, le 2-butyl-2-éthyl-1,3-propanediol et le glycérol.

**5.** Procédé selon l'une quelconque des revendications précédentes, **caractérisé en ce que**, dans l'étape (i) ledit composé du magnésium (a) est mis à réagir avec ledit alcool (b), qui est ledit polyalcool $R'(OH)_m$, selon un rapport en moles Mg/R' $(OH)_m$ compris entre 1:1 et 1:0,25 et de préférence entre environ 1:0,8 et environ 1:0,3.

**6.** Procédé selon l'une quelconque des revendications précédentes, **caractérisé en ce que**, dans l'étape (i), ledit composé du magnésium (a) est mis à réagir avec au moins deux desdits alcools (b), dont l'un est ledit monoalcool R'OH et dont l'autre est ledit polyalcool $R'(OH)_m$.

**7.** Procédé selon l'une quelconque des revendications précédentes, **caractérisé en ce que**, dans l'étape (i) ledit composé du magnésium (a) est mis à réagir avec ledit au moins un alcool (b) dans au moins l'une des conditions suivantes :

- à une température élevée, de préférence d'environ 30 à environ 80°C,
- pendant un laps de temps d'environ 10 minutes à environ 90 minutes, de préférence d'environ 30 minutes,
- en présence d'un solvant hydrocarboné en $C_5$ à $C_{10}$, de préférence l'heptane.

**8.** Procédé selon l'une quelconque des revendications précédentes, **caractérisé en ce que** ledit monoalcool est un alcool de formule R'OH dans laquelle R' est un groupe alkyle en $C_2$ à $C_{16}$, de préférence un groupe alkyle en $C_4$ à $C_{12}$, tout spécialement **en ce que** ledit monoalcool (b) est le 2-éthyl-1-hexanol.

**9.** Procédé selon l'une quelconque des revendications précédentes, **caractérisé en ce que** ledit composé du magnésium (a) est dans l'étape (i) mis à réagir avec ledit monoalcool R'OH selon un rapport en moles Mg/ROH compris entre 1:4 et 1:1, de préférence entre environ 1:2,5 et environ 1:1,5.

**10.** Procédé selon l'une quelconque des revendications précédentes, **caractérisé en ce que** ledit composé du magnésium (ab) est obtenu par réaction dans un ordre quelconque d'un dialkylmagnésium $R_2Mg$ et d'un dihalogénure de magnésium $MgX_2$ avec au moins un alcool (b) choisi dans l'ensemble consistant en les polyalcools $R'(OH)_m$ où R' est un groupe hydrocarboné m-valent en $C_1$ à $C_{20}$ et m est un entier choisi parmi les nombres 2, 3, 4, 5 et 6.

**11.** Procédé selon l'une quelconque des revendications précédentes, **caractérisé en ce que** ledit composé du magnésium (a) est un dialkylmagnésium $R_2Mg$ dans lequel chaque R est un groupe alkyle en $C_4$ à $C_{12}$, identique ou différent, de préférence dans lequel un radical R est un groupe butyle et l'autre radical R est un groupe octyle.

**12.** Procédé selon l'une quelconque des revendications 1 à 10, **caractérisé en ce que** ledit composé du magnésium (a) est un dihalogénure de magnésium $MgX_2$, qui est le dichlorure de magnésium.

**13.** Procédé selon l'une quelconque des revendications précédentes, **caractérisé en ce que**, dans ledit dihalogénure d'acide dicarboxylique (c) de Formule (1), les deux radicaux R" forment avec les deux atomes de carbone insaturés de ladite Formule (1) un noyau aliphatique en $C_5$ à $C_{20}$ ou aromatique en $C_6$ à $C_{20}$, et X' est le chlore, de préférence **en ce que** ledit dihalogénure d'acide dicarboxylique (c) est le dichlorure de phtaloyle.

**14.** Procédé selon l'une quelconque des revendications précédentes, **caractérisé en ce que**, dans l'étape (ii), ledit premier intermédiaire (ab) est mis à réagir avec ledit dihalogénure d'acide dicarboxylique (c) selon une proportion en moles $Mg_{total\ ajouté}$/(c) compris entre 1:1 et 1:0,1 et de préférence entre environ 1:0,6 et environ 1:0,25.

**15.** Procédé selon l'une quelconque des revendications précédentes, **caractérisé en ce que**, dans l'étape (ii), ledit premier intermédiaire (ab) est mis à réagir avec ledit dihalogénure d'acide dicarboxylique (c), dans au moins l'une des conditions suivantes :

- addition dudit dihalogénure d'acide dicarboxylique (c) à une température inférieure à la température ambiante, et chauffage du mélange réactionnel obtenu,
- maintien des réactifs les uns avec les autres à une température élevée, de préférence à une température d'environ 30 à environ 80°C,
- maintien des réactifs les uns avec les autres pendant un laps de temps d'environ 10 minutes à environ 90 minutes, de préférence pendant environ 30 minutes,
- réaction des réactifs en présence d'un solvant hydrocarboné en $C_5$ à $C_{10}$, de préférence l'heptane.

**16.** Procédé selon la revendication 15, **caractérisé en ce que**, après que ledit premier intermédiaire (ab) a été mis à

réagir avec ledit dihalogénure d'acide dicarboxylique (c), ledit solvant hydrocarboné en $C_5$ à $C_{10}$, de préférence l'heptane, est chassé par évaporation, de préférence à une température d'environ 100 à environ 110°C.

**17.** Procédé selon l'une quelconque des revendications précédentes, **caractérisé par** l'addition, en liaison avec au moins l'une quelconque des étapes (i) à (iii) ci-dessus, d'au moins un hydrocarbure halogéné réactif (e) de Formule (2)

$$R'''X'''_n \qquad (2)$$

dans laquelle R''' est un groupe hydrocarboné n-valent en $C_1$ à $C_{20}$, X''' If est un halogène et n est un entier choisi parmi les nombres 1, 2, 3 et 4.

**18.** Procédé selon la revendication 17, **caractérisé en ce que**, dans ledit hydrocarbure halogéné réactif (e) de Formule (2), R''' est un groupe hydrocarboné monovalent ou divalent en $C_1$ à $C_{10}$, x''' est le chlore et n vaut 1 ou 2, de préférence **en ce que** ledit halogénure d'hydrocarbyle (e) est un chlorure de butyle ou un (1,4)-dichlorobutane, tout spécialement **en ce qu'**il s'agit du chlorure de tert-butyle ou du (1,4)-dichlorobutane.

**19.** Procédé selon la revendication 17 ou 18, **caractérisé en ce que** ledit hydrocarbure halogéné réactif (e) est ajouté en une quantité correspondant à un rapport en moles $Mg_{total\ ajouté}$/(e) compris entre 1:0,2 et 1:20, de préférence entre environ 1:1 et environ 1:4.

**20.** Procédé selon la revendication 17, 18 ou 19, **caractérisé en ce que** ledit hydrocarbure halogéné réactif (e) est ajouté en liaison avec l'étape (ii).

**21.** Procédé selon les revendications 15 et 20, **caractérisé en ce que**, après que ledit solvant hydrocarboné en $C_5$ à $C_{10}$, de préférence ledit heptane, a été chassé par évaporation, ledit deuxième intermédiaire (abc) est mis en contact avec ledit hydrocarbure halogéné réactif (e), de préférence pendant un laps de temps d'environ 10 minutes à environ 90 minutes, de préférence d'environ 30 minutes.

**22.** Procédé selon la revendication 21, **caractérisé en ce qu'**on ajoute audit deuxième intermédiaire (abc) ou à son produit de contact avec ledit hydrocarbure halogéné réactif (e) un hydrocarbure dissolvant en $C_5$ à $C_{10}$, tout spécialement selon un rapport en moles $Mg_{total\ ajouté}$/toluène compris entre environ 1:2 et environ 1:10.

**23.** Procédé selon l'une quelconque des revendications précédentes, **caractérisé en ce que**, dans l'étape (iii), ledit tétrahalogénure de titane (d) est le tétrachlorure de titane.

**24.** Procédé selon l'une quelconque des revendications précédentes, **caractérisé en ce que**, dans l'étape (iii), ledit deuxième intermédiaire (abc) est mis à réagir avec ledit tétrahalogénure de titane (d) selon un rapport en moles $Mg_{total\ ajouté}$/(d) compris entre 1:100 et 1:1, de préférence entre environ 1:50 et environ 1:5, tout spécialement d'environ 1:10.

**25.** Procédé selon l'une quelconque des revendications précédentes, **caractérisé en ce que**, dans l'étape (iii), ledit deuxième intermédiaire (abc), de préférence une solution de ce dernier, est ajouté lentement, de préférence goutte à goutte, audit tétrahalogénure de titane (d), qui de préférence est chaud (par exemple 110°C), pour former une solution dudit composant catalyseur.

**26.** Procédé selon les revendications 22 et 25, **caractérisé en ce que** ladite solution toluénique dudit deuxième intermédiaire (abc), ou son produit de contact avec ledit hydrocarbure halogéné réactif (e), est ajoutée lentement audit tétrahalogénure de titane (d) à 110°C.

**27.** Procédé selon la revendication 26, **caractérisé en ce que** ladite solution dudit deuxième intermédiaire (abc), ou son produit de contact avec ledit hydrocarbure halogéné réactif (e), est mis en contact avec ledit tétrahalogénure de titane (d) à 110°C pendant un laps de temps d'environ 5 minutes à environ 20 minutes, de préférence pendant environ 10 minutes.

**28.** Procédé selon l'une quelconque des revendications précédentes, **caractérisé en ce que**, dans l'étape (iv), ledit

composant catalyseur, sous forme brute, ou un précurseur dudit composant catalyseur, est récupéré par refroidissement d'une solution dudit composant catalyseur, de préférence de ladite solution toluénique dudit composant catalyseur, pour provoquer la précipitation dudit composant catalyseur brut ou dudit précurseur de ce dernier, ce après quoi on le laisse de préférence se déposer.

**29.** Procédé selon la revendication 28, **caractérisé en ce que**, immédiatement avant ladite précipitation, on ajoute à ladite solution du composant catalyseur un solvant hydrocarboné en $C_5$ à $C_{10}$, de préférence un toluène, tout spécialement le toluène, selon un rapport en moles $Mg_{total\ ajouté}$/toluène d'environ 1: 10 à environ 1:100.

**30.** Procédé selon la revendication 28 ou 29, **caractérisé en ce que**, après que ledit composant catalyseur brut ou ledit précurseur de ce dernier s'est déposé, le liquide surnageant est éliminé, par exemple par décantation ou siphonage.

**31.** Procédé selon l'une quelconque des revendications précédentes, **caractérisé en ce que**, dans l'étape (v), ledit composant catalyseur brut récupéré ou ledit précurseur de ce dernier est lavé avec du toluène, de préférence avec du toluène chaud (par exemple à 90°C).

**32.** Procédé selon l'une quelconque des revendications précédentes, **caractérisé en ce que**, dans l'étape (v), ledit composant catalyseur brut récupéré ou ledit précurseur de ce dernier est lavé avec de l'heptane, de préférence avec de l'heptane chaud (par exemple à 90°C).

**33.** Procédé selon l'une quelconque des revendications précédentes, **caractérisé en ce que**, dans l'étape (v), ledit composant catalyseur brut récupéré ou son précurseur est lavé avec du pentane.

**34.** Procédé selon l'une quelconque des revendications précédentes, **caractérisé en ce que**, dans l'étape (v), ledit composant catalyseur brut récupéré ou son précurseur est lavé jusqu'à arriver à la proportion suivante entre ledit dihalogénure de magnésium, ledit tétrahalogénure de titane et ledit di-, oligo- et/ou polyester d'acide dicarboxylique, en tant que donneur d'électrons interne ED (3) :

$$(MgX_2)_{8\text{-}10}\,(TiX''_4)_1(ED)_{0,7\text{-}1,3} \qquad (3)$$

dans laquelle $MgX_2$ est ledit dihalogénure de magnésium, $TiX''_4$ est ledit tétrahalogénure de titane, X et X'' sont de préférence Cl, et ED est ledit di-, oligo- et/ou polyester d'acide dicarboxylique en tant que donneur d'électrons interne, de préférence un diester de l'acide phtalique, ce à l'occasion de quoi ledit composant catalyseur récupéré est de préférence lavé d'abord avec du toluène, plus particulièrement du toluène chaud (par exemple à 90°C), puis au moins deux fois avec de l'heptane chaud (à 90°C) et finalement avec du pentane.

**35.** Procédé selon l'une quelconque des revendications précédentes, **caractérisé en ce que** composant catalyseur lavé est séché, de préférence par évaporation.

**36.** Composant catalyseur de polymérisation d'oléfines comprenant un dihalogénure de magnésium, un tétrahalogénure de titane et un di-, un oligo- et/ou un polyester d'acide dicarboxylique en tant que donneur d'électrons interne ED, **caractérisé en ce qu'**il a été préparé par le procédé selon l'une quelconque des revendications précédentes.

**37.** Composant catalyseur solide de polymérisation d'oléfines, comprenant un dihalogénure de magnésium, un tétrahalogénure de titane et un di-, un oligo- et/ou un polyester d'acide dicarboxylique en tant que donneur d'électrons interne ED, **caractérisé en ce qu'**il est essentiellement homogène et peut être obtenu par le procédé selon la revendication 34, et qu'il présente la proportion suivante entre ledit dihalogénure de magnésium, ledit tétrahalogénure de titane et ledit di-, oligo-et/ou un polyester d'acide dicarboxylique en tant que donneur d'électrons interne ED (3) :

$$(MgX_2)_{8\text{-}10}(TiX''_4)_1(ED)_{0,7\text{-}1,3} \qquad (3)$$

où $MgX_2$ est ledit dihalogénure de magnésium, $TiX''_4$ est ledit tétrahalogénure de titane, X et/ou X'' sont de préférence Cl, et ED est ledit di-, oligo- et/ou polyester d'acide dicarboxylique en tant que seul donneur d'électrons

interne, de préférence un diester de l'acide phtalique.

**38.** Composant catalyseur selon la revendication 36 ou 37, **caractérisé en ce qu'**il contient un halogène en une quantité d'environ 10 à environ 60 % supérieure à la quantité d'halogène calculée sur la base des quantités présentes de magnésium et de titane, dans l'hypothèse que la totalité du magnésium se présente sous la forme dudit $MgCl_2$ et la totalité du titane se présente sous la forme dudit TiX4.

**39.** Composant catalyseur selon la revendication 36, 37 ou 38, **caractérisé en ce qu'**il présente une image de diffraction des rayons X, avec une épaisseur lamellaire, indiquant un pic à 17° pour 2Θ, ce qui montre un déplacement net de position par comparaison au $MgCl_2$ amorphe normal, qui donne une hauteur indiquant un pic 2Θ à 15°.

**40.** Procédé de polymérisation d'oléfines, **caractérisé par** les étapes consistant

(A) à préparer en solution un composant catalyseur de polymérisation d'oléfines comprenant un dihalogénure de magnésium, un tétrahalogénure de titane et un di-, un oligo- et/ou un polyester d'acide dicarboxylique en tant que donneur d'électrons interne ED, par

(i) réaction d'au moins un composé du magnésium (a), choisi dans l'ensemble consistant en un dialkylmagnésium $R_2Mg$, dans lequel chaque R est un groupe alkyle en $C_1$ à $C_{20}$, identique ou différent, et un dihalogénure de magnésium $MgX_2$ dans lequel X est un halogène, avec au moins un alcool (b) choisi dans l'ensemble consistant en au moins un polyalcool $R'(OH)_m$ et un mélange d'au moins un monoalcool R'OH et d'au moins un polyalcool $R'(OH)_m$, où R' est un groupe hydrocarboné en $C_1$ à $C_{20}$, respectivement 1-valent ou m-valent, et m est un entier choisi parmi les nombres 2, 3, 4, 5 et 6, pour donner un premier intermédiaire (ab), et
(ii) réaction dudit premier intermédiaire (ab) avec au moins un dihalogénure d'acide dicarboxylique (c), ce qui va former essentiellement la totalité du di-, oligo-et/ou polyester d'acide dicarboxylique, et qui a la Formule (1) :

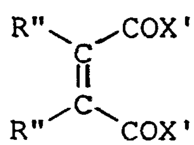

(1)

dans laquelle chaque R" est un groupe hydrocarboné en $C_1$ à $C_{20}$ identique ou différent, ou encore les deux radicaux R" forment ensemble avec les deux atomes de carbone insaturés de la formule un noyau aliphatique ou aromatique en $C_5$ à $C_{20}$, et X' est un halogène, pour donner un deuxième intermédiaire (abc), et
(iii) réaction dudit deuxième intermédiaire (abc) avec au moins un tétrahalogénure de titane $TiX''_4$ (d) dans lequel x" est un halogène, ou bien
(ii') réaction dudit premier intermédiaire (ab) avec au moins un tétrahalogénure de titane $TiX''_4$ (d) dans lequel X" est un halogène, pour donner un autre deuxième intermédiaire (abd), et
(iii') réaction dudit autre deuxième intermédiaire (abd) avec au moins un dihalogénure d'acide dicarboxylique (c), qui va former essentiellement la totalité du di-, oligo- et/ou polyester d'acide dicarboxylique, et qui a la formule (1)

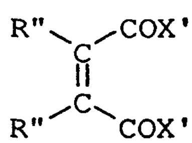

(1)

dans laquelle chaque R" est un groupe hydrocarboné en $C_1$ à $C_{20}$, identique ou différent, ou encore les deux radicaux R" forment ensemble avec les deux atomes de carbone insaturés de la formule un noyau aliphatique ou aromatique en $C_5$ à $C_{20}$, et X' est un halogène,
(iv) récupération par précipitation dudit composant catalyseur sous forme brute, ou d'un précurseur dudit

composant catalyseur, et

(v) éventuellement, lavage dudit composant catalyseur brut ou dudit précurseur, pour donner ledit composant catalyseur,

(B) à introduire dans au moins un réacteur de polymérisation ledit composant catalyseur, ainsi qu'un co-catalyseur ayant la formule (4)

$$R_pAl_rX_{3r-p} \quad (4)$$

dans laquelle R est un groupe alkyle en $C_1$ à $C_{10}$, de préférence un groupe alkyle en $C_1$ à $C_4$, tout spécialement le groupe éthyle, X est un halogène, de préférence le chlore, p est un entier de 1 à (3r-1) et valant de préférence 2 ou 3 et tout spécialement 3, et r vaut 1 ou 2 et de préférence 1, le rapport en moles entre ledit composant catalyseur et ledit co-catalyseur, exprimé par Al/Ti, étant de préférence compris entre 10 et 2000, plus particulièrement entre 50 et 1000, et tout spécialement entre 200 et 500,

éventuellement, un donneur d'électrons externe, qui de préférence est un silane, plus particulièrement un (alkyle en $C_1$ à $C_{12}$)(alcoxy en $C_1$ à $C_{12}$)silane, tout spécialement le cylohexyl-méthyl-diméthoxysilane,

éventuellement, un solvant hydrocarboné en $C_4$ à $C_{10}$, de préférence le pentane, l'hexane et/ou l'heptane,

de préférence un agent de transfert de chaîne, qui est l'hydrogène, et

au moins un monomère oléfinique, qui de préférence est le propylène,

(C) à mettre en oeuvre la polymérisation dudit monomère oléfinique dans ledit au moins un réacteur de polymérisation pour donner un polymère d'oléfine (= homopolymère ou copolymère), et

(D) à récupérer ledit polymère d'oléfine.

**41.** Procédé selon la revendication 40, **caractérisé en ce que** ledit composant catalyseur est préparé par le procédé selon les revendications 2 à 35.

**42.** Procédé de polymérisation d'oléfines, **caractérisé par** les étapes consistant

(A) à mettre à disposition un composant catalyseur solide de polymérisation d'oléfines, qui est essentiellement homogène, et peut être obtenu par le procédé selon la revendication 34, et qui comprenant un dihalogénure de magnésium, un tétrahalogénure de titane et un di-, un oligo- et/ou un polyester d'acide dicarboxylique en tant que donneur d'électrons interne ED, selon la proportion suivante (3) :

$$(MgX_2)_{8-10}(TiX''_4)_1(ED)_{0,7-1,3} \quad (3)$$

dans laquelle $MgX_2$ est ledit dihalogénure de magnésium, $TiX''_4$ est ledit tétrahalogénure de titane, X et/ou X'' sont de préférence Cl, et ED est ledit di-, oligo- et/ou polyester d'acide dicarboxylique en tant que donneur interne, de préférence un diester d'acide phtalique,

(B) à introduire dans au moins un réacteur de polymérisation ledit composant catalyseur, ainsi qu'un co-catalyseur ayant la formule (4)

$$R_pAl_rX_{3r-p} \quad (4)$$

dans laquelle R est un groupe alkyle en $C_1$ à $C_{10}$, de préférence un groupe alkyle en $C_1$ à $C_4$, tout spécialement le groupe éthyle, X est un halogène, de préférence le chlore, p est un entier de 1 à (3r-1) et valant de préférence 2 ou 3 et tout spécialement 3, et r vaut 1 ou 2 et de préférence 1, le rapport en moles entre ledit composant catalyseur et ledit co-catalyseur, exprimé par Al/Ti, étant de préférence compris entre 10 et 2000, plus particulièrement entre 50 et 1000, et tout spécialement entre 200 et 500,

éventuellement, un donneur d'électrons externe, qui de préférence est un silane, plus particulièrement un (alkyle en $C_1$ à $C_{12}$) (alcoxy en $C_1$ à $C_{12}$)silane, tout spécialement le cylohexyl-méthyl-diméthoxysilane,

éventuellement, un solvant hydrocarboné en $C_4$ à $C_{10}$, de préférence le pentane, l'hexane et/ou l'heptane,

de préférence un agent de transfert de chaîne, qui est l'hydrogène, et
au moins un monomère oléfinique, qui de préférence est le propylène,

(C) à mettre en oeuvre la polymérisation dudit monomère oléfinique dans ledit au moins un réacteur de polymérisation pour donner un polymère d'oléfine (= homopolymère ou copolymère), et

(D) à récupérer ledit polymère d'oléfine.

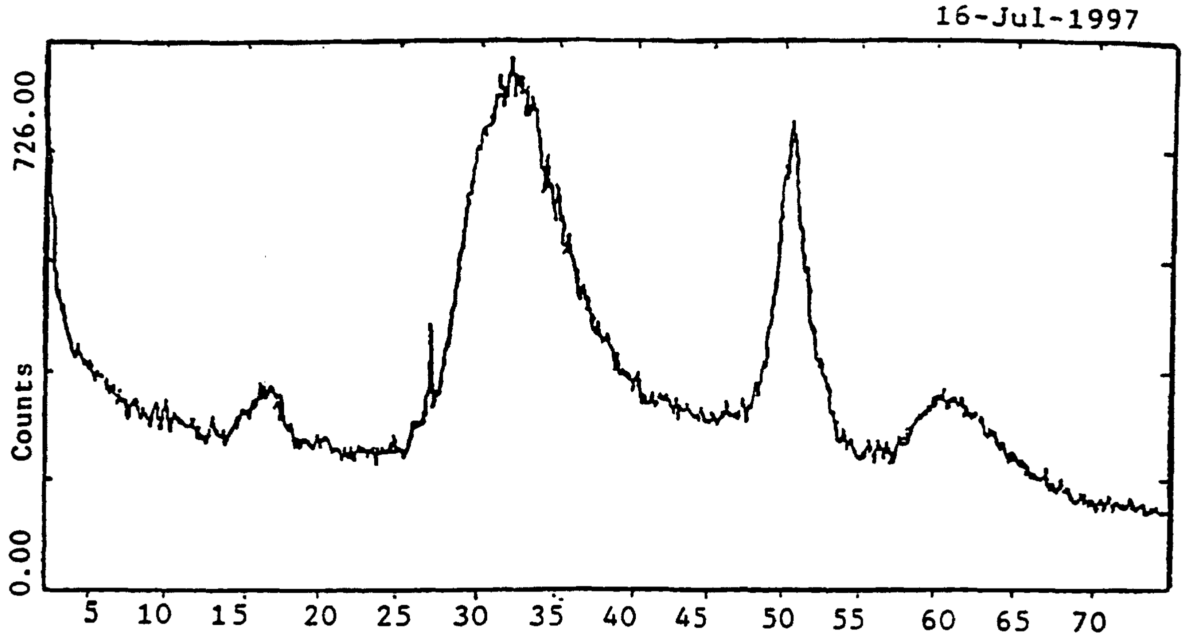


Figure 1

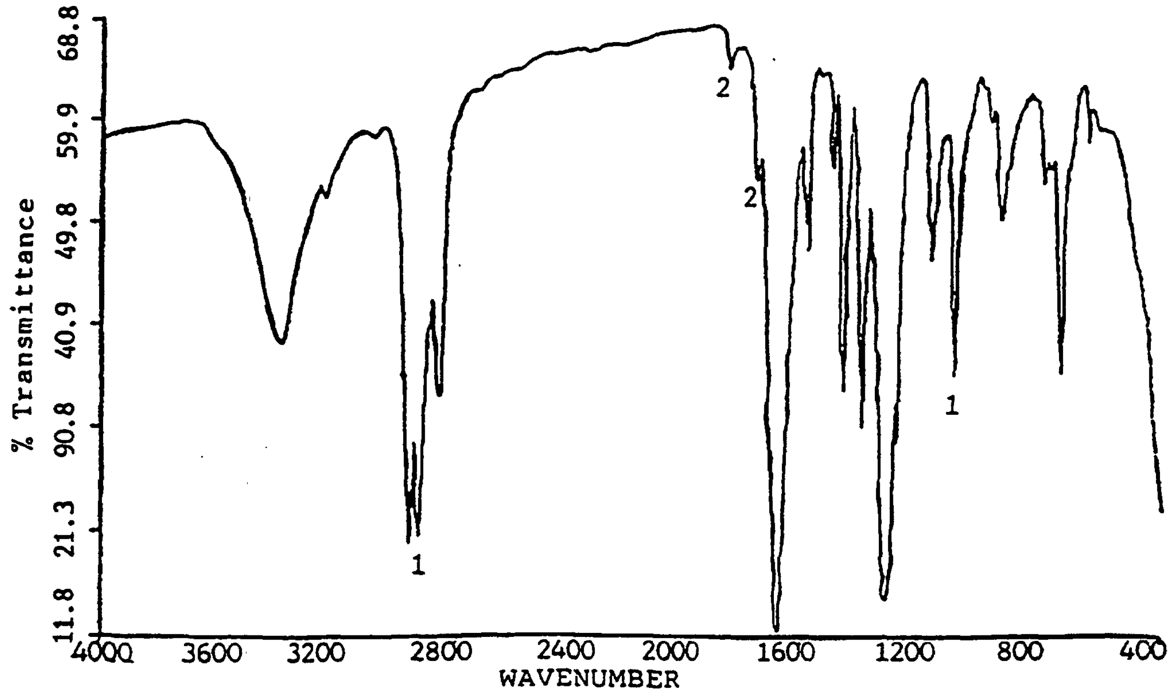


Figure 2

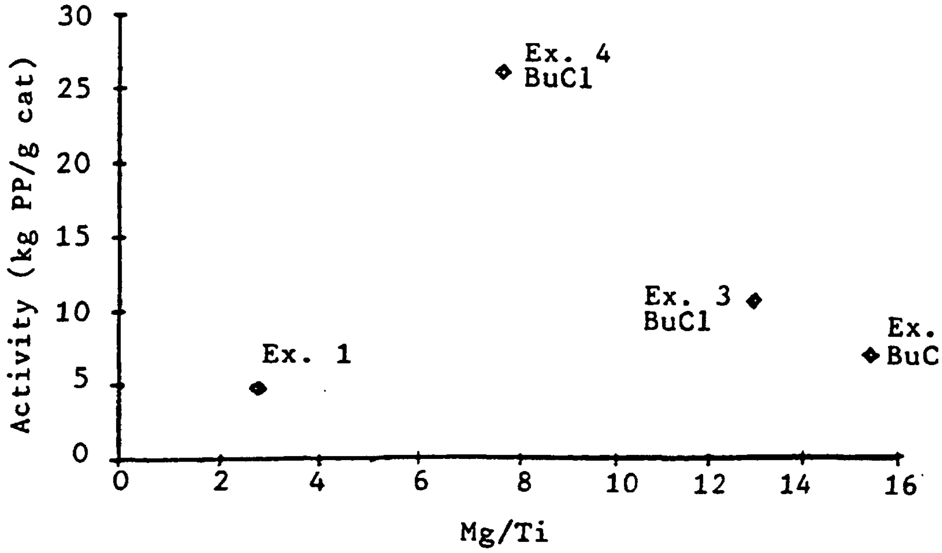


Figure 3

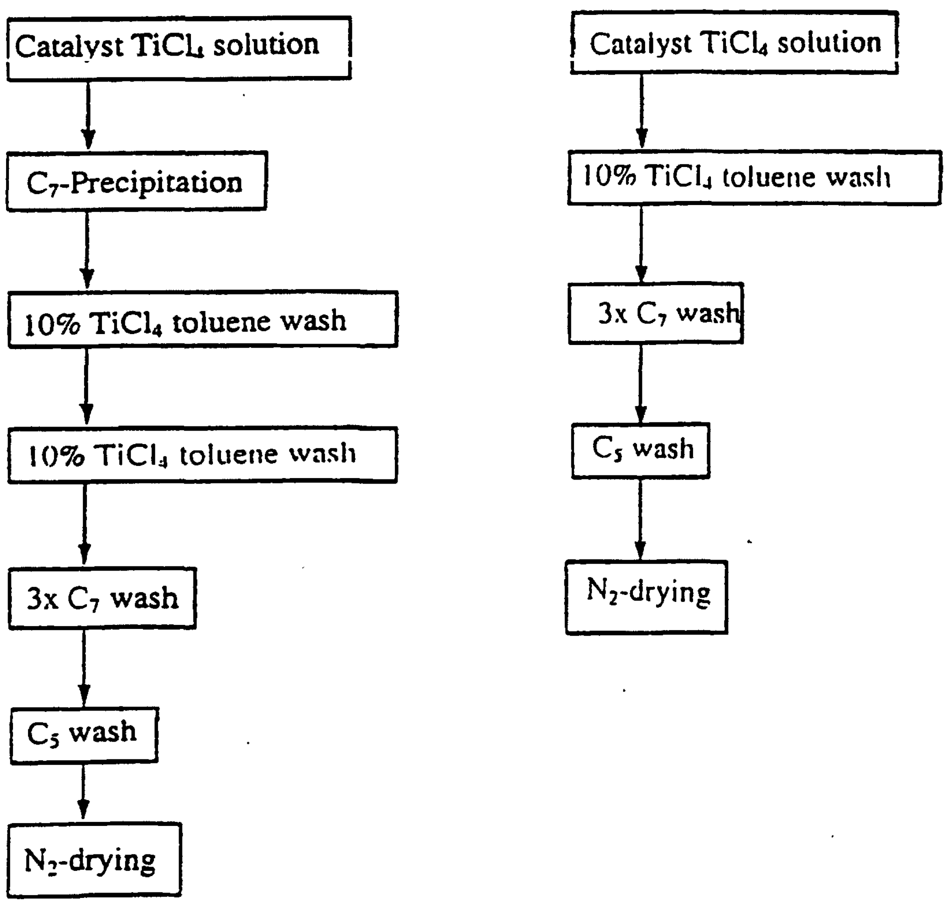


Figure 4

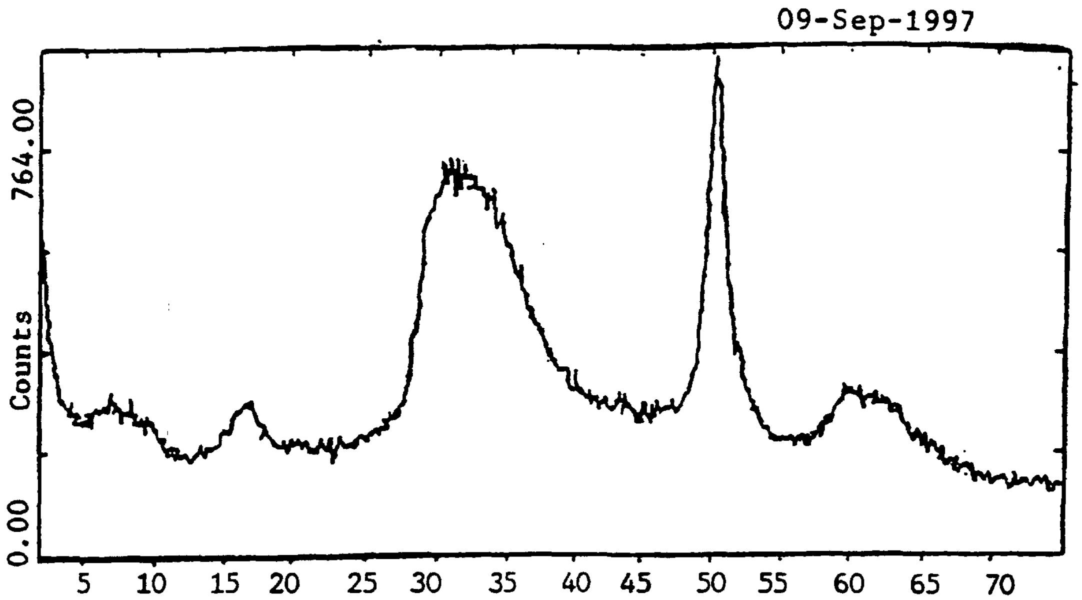


Figure 5

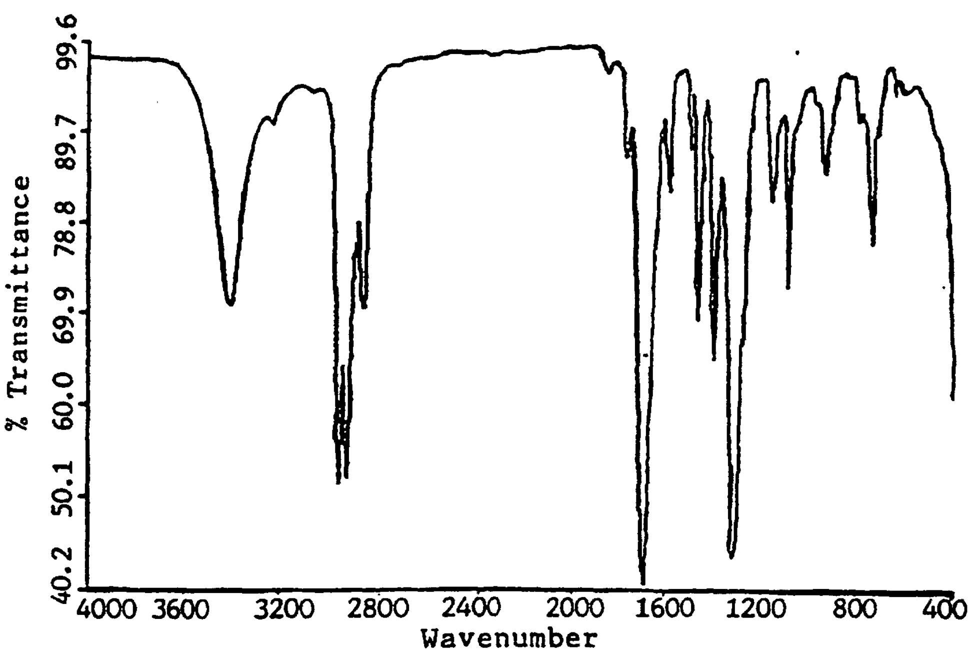


Figure 6

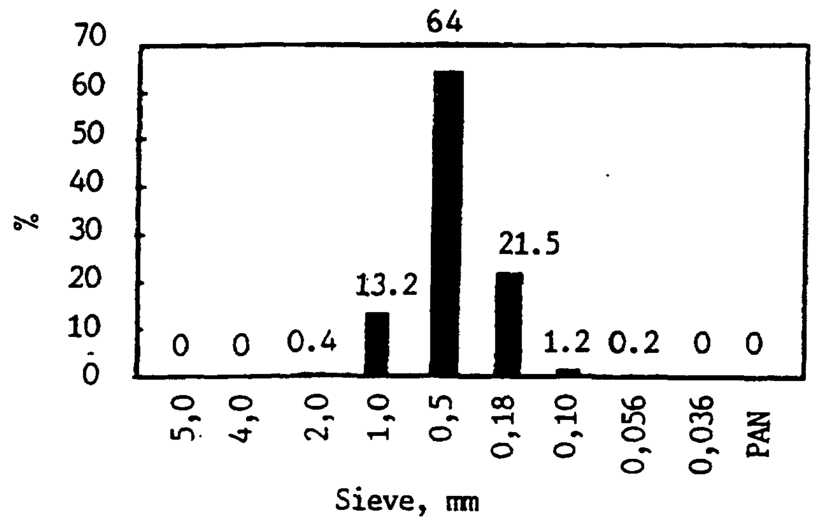


Figure 7

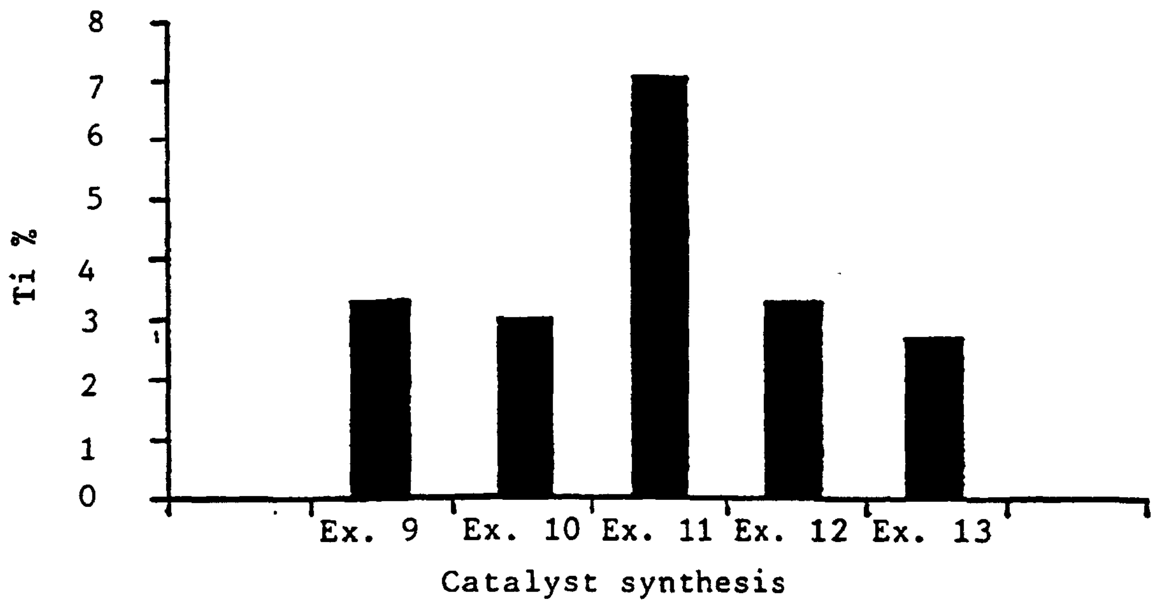


Figure 8

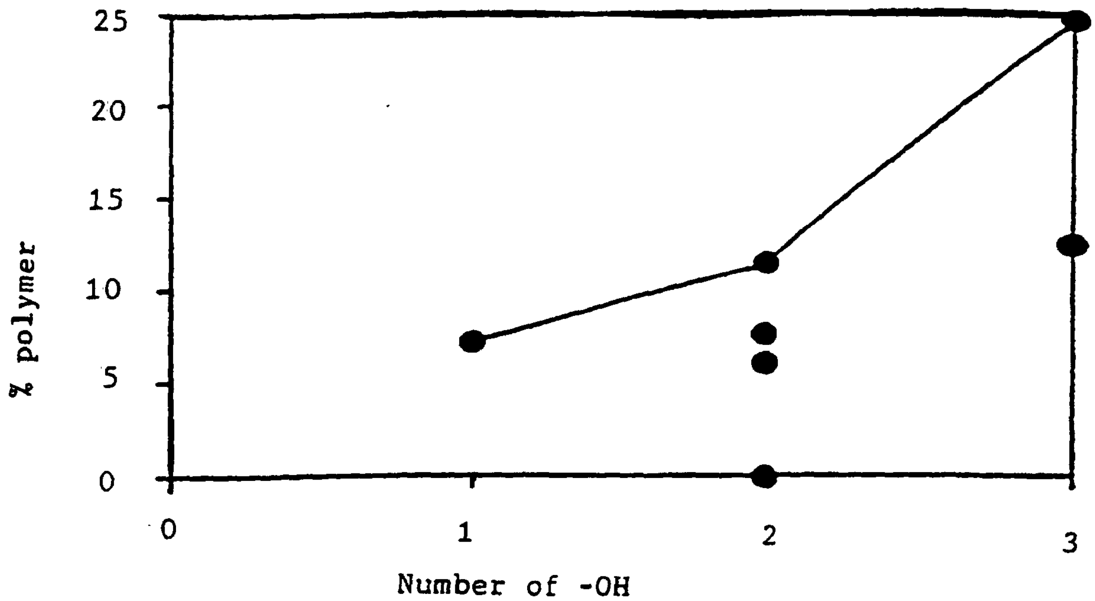


Figure 9

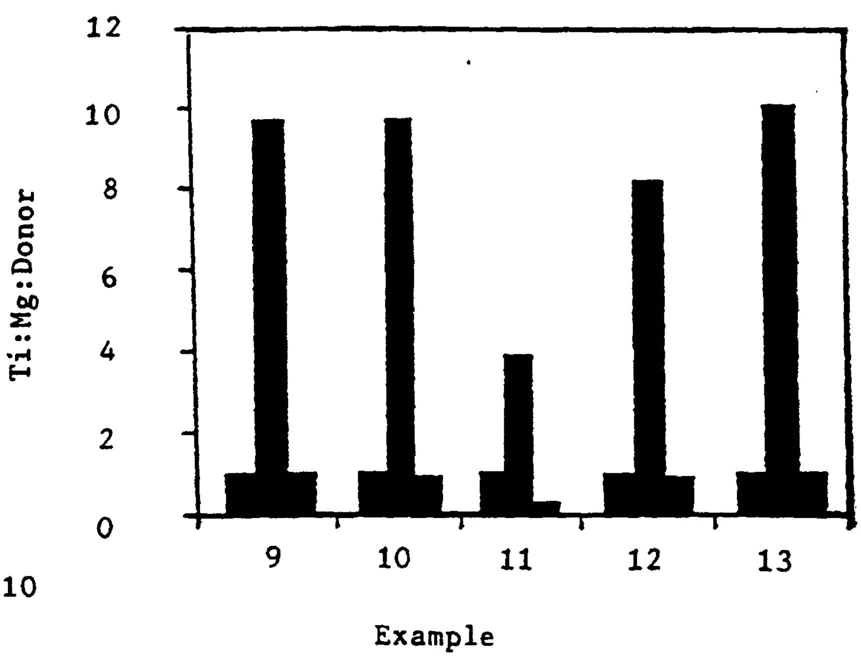


Figure 10

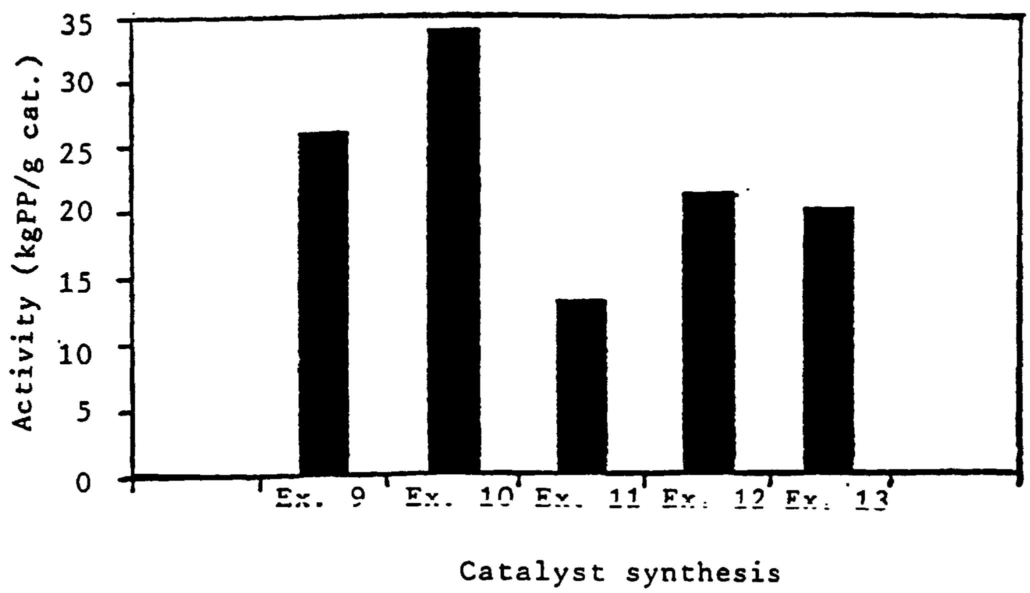
Activity (kgPP/g cat.)
35
30
25
20
15
10
5
0
Ex. 9
Ex. 10
Ex. 11
Ex. 12
Ex. 13
Catalyst synthesis

Figure 11

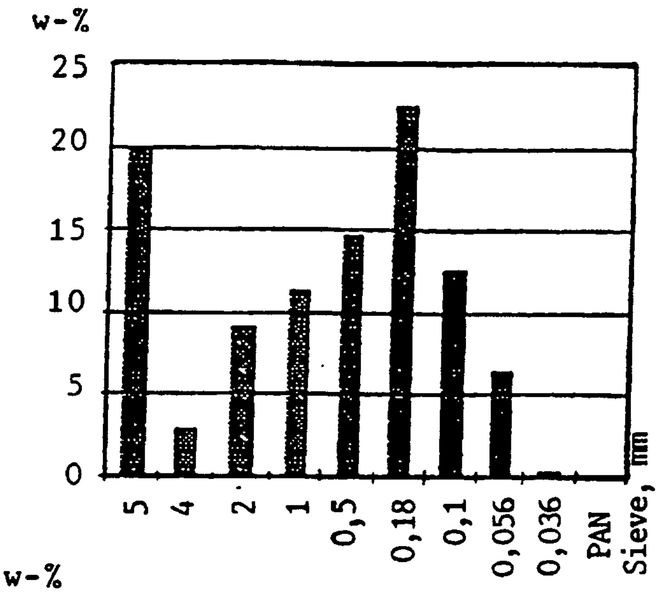


Figure 12a

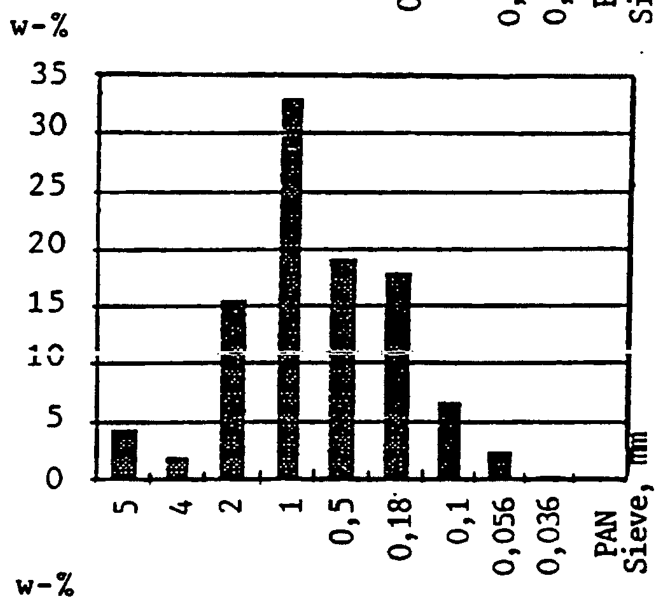


Figure 12b

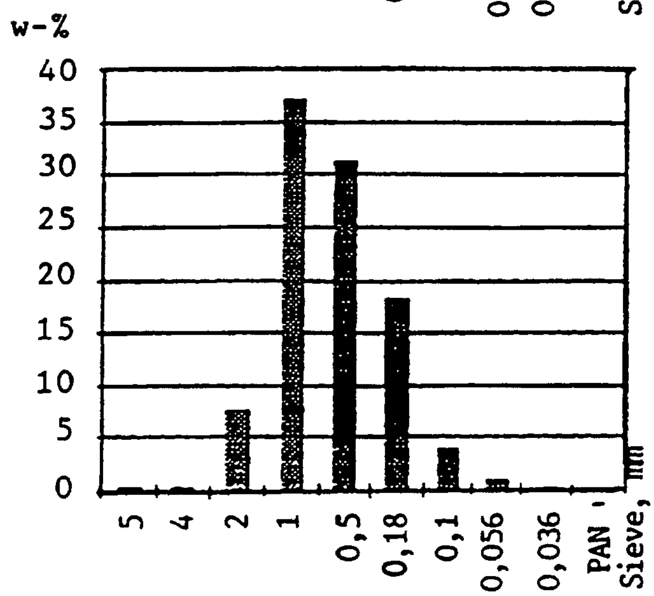


Figure 12c

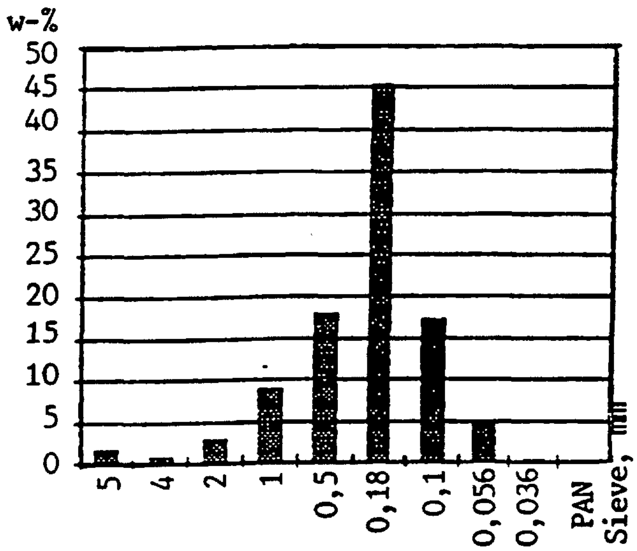


Figure 12d

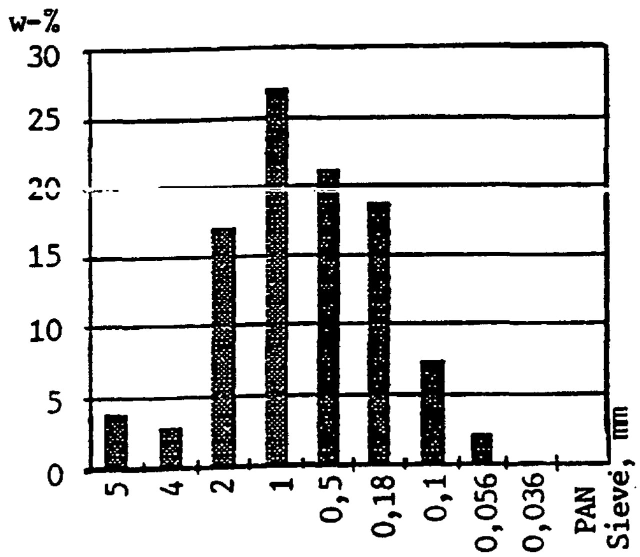


Figure 12e

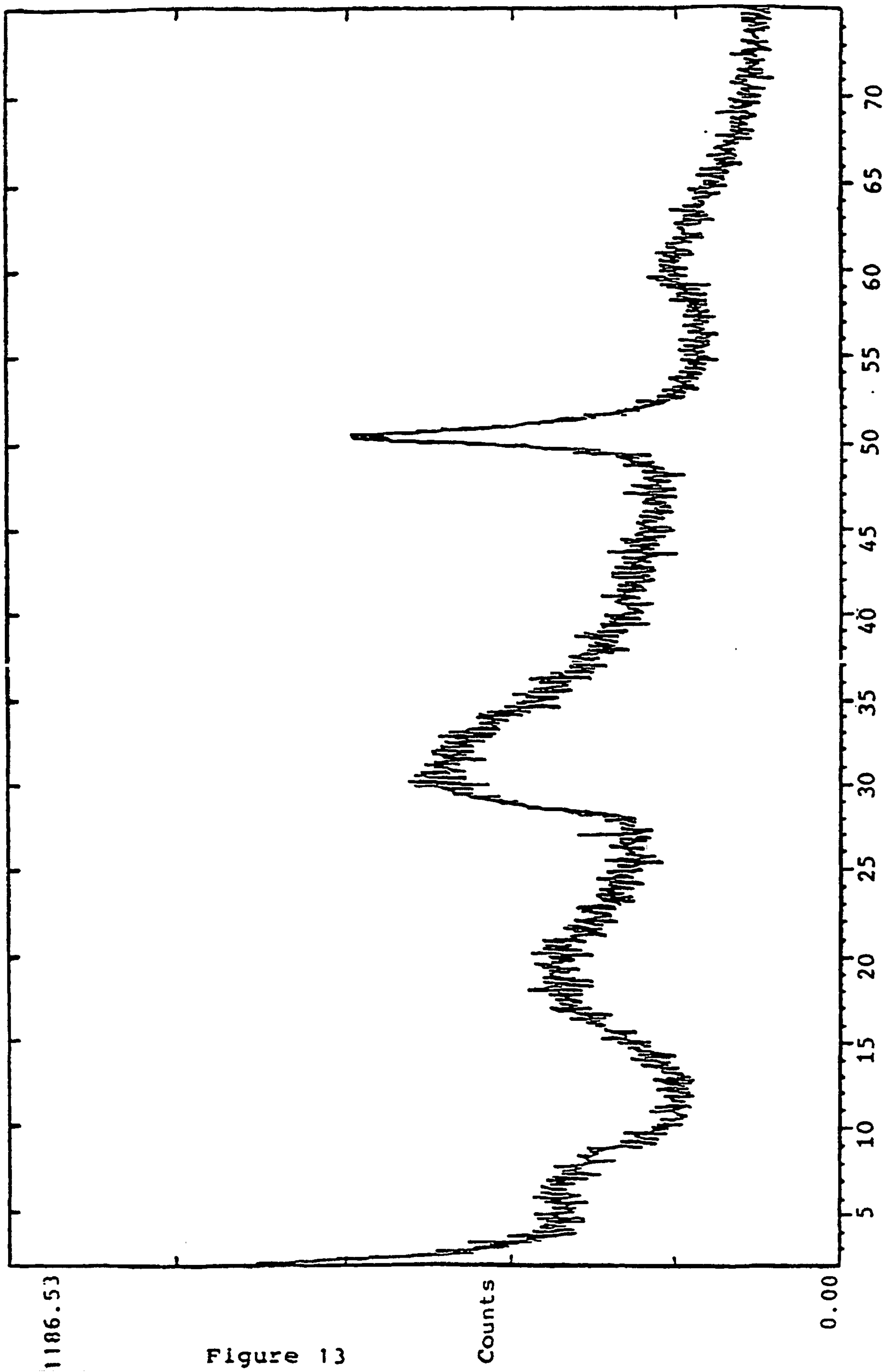


Figure 13